# EUROPEAN PATENT APPLICATION

(11) **EP 4 180 249 A1**
(43) Date of publication of application: **17.05.2023**
(21) Application number: 21944412.2
(22) Date of filing: 29.09.2021
(51) Int. Cl.: B60G 21/055

(54) **ALL-TERRAIN VEHICLE**

(71) Applicant: Zhejiang CFMOTO Power Co., Ltd., Hangzhou, Zhejiang 310000 (CN)
(72) Inventor: HE, An, Hangzhou, Zhejiang 311100 (CN) (CN); RAO, Lihua, Hangzhou, Zhejiang 311100 (CN) (CN); WANG, Jianyong, Hangzhou, Zhejiang 311100 (CN) (CN); HU, Xiayang, Hangzhou, Zhejiang 311100 (CN) (CN)
(74) Representative: Sun, Yiming
(86) International application number: PCT/CN2021/121822
(87) International publication number: WO 2023/050194

(57) **Abstract**

The disclosure relates to a side-by-side utility vehicle. The side-by-side utility vehicle may include a frame; a front wheel assembly; a rear wheel assembly; a front suspension assembly; and a front torsion bar assembly. The front suspension assembly comprises a first lower rocker arm, a first upper rocker arm, and a front wheel shaft support assembly mounted between the first lower rocker arm and the first upper rocker arm. The first lower rocker arm and the first upper rocker arm are mounted on the frame. The first upper rocker arm is located above the first lower rocker arm along the vertical direction of the side-by-side utility vehicle. The front torsion bar assembly is rotatably mounted on the frame. The front torsion bar assembly is located above the first upper rocker arm, and is movably connected to the first upper rocker arm.

## Description

### FIELD OF THE DISCLOSURE

The disclosure relates to the technical field of side-by-side utility vehicles.

### BACKGROUND OF THE DISCLOSURE

Side-by-side utility vehicle refers to a vehicle that is designed for use on various types of terrain. Side-by-side utility vehicles can be used for side-by-side utility, sports and freight transportation. The side-by-side utility vehicles have a broad market due to their comprehensive functions. The side-by-side utility vehicle basically may include a frame, a front suspension assembly, a rear suspension assembly, a front wheel assembly and a rear wheel assembly. The front suspension assembly may be mounted at the front end of the frame, and the rear suspension assembly may be mounted at the rear end of the frame; and the front suspension assembly and the rear suspension assembly jointly form a shock absorption to the front and rear ends of the frame to improve the comfort of the side-by-side utility vehicle. The front wheel assembly may be mounted on the front suspension assembly, and the rear wheel assembly may be mounted on the rear suspension assembly. The front suspension assembly may include a general front torsion bar. The front torsion bar generates a reaction force after a force is applied. The reaction force is applied to the front wheels to maintain the front wheels at substantially the same height, to prevent the utility vehicle from leaning and to assist the steering of the utility vehicle at the same time. However, the existing installation position and layout of the front torsion bar makes the reaction force generated by the front torsion bar delivered indirectly and slowly. This greatly damages the stability of the side-by-side utility vehicle.

### SUMMARY OF THE DISCLOSURE

A side-by-side utility vehicle with good stability and smooth running is provided to solve the above problems.

A side-by-side utility vehicle may include a frame, a front wheel assembly, a rear wheel assembly, a front suspension assembly and a rear suspension assembly. The frame may include a front frame portion and a rear frame portion. The front frame portion may be located at the front end of the side-by-side utility vehicle, and the rear frame portion may be located at the rear end of the side-by-side utility vehicle. The front wheel assembly may include a left-front wheel and a right-front wheel. The rear wheel assembly may include a left-rear wheel and a right-rear wheel. The front suspension assembly may be at least partially mounted on the front frame portion. The front suspension assembly may include a first lower rocker arm, a first upper rocker arm, and a front wheel shaft support assembly disposed between the first lower rocker arm and the first upper rocker arm. The first lower rocker arm and the first upper rocker arm may be mounted on the frame respectively and the first upper rocker arm may be located above the first lower rocker arm along the vertical direction of the side-by-side utility vehicle. The rear suspension assembly may be at least partially mounted on the rear frame portion. The rear suspension assembly may include a second lower rocker arm, a second upper rocker arm, a rear shock absorber, and a rear wheel shaft support assembly disposed between the second lower rocker arm and the second upper rocker arm. The second lower rocker arm and the second upper rocker arm may be mounted on the rear frame portion, respectively. The front suspension assembly may further include a front torsion bar assembly rotatably mounted on the front frame portion. The front torsion bar assembly may be at least partially located above the first upper rocker arm along the vertical direction of the side-by-side utility vehicle and may be movably connected to the first upper rocker arm. A control arm may be located between the second lower rocker arm and the second upper rocker arm along the vertical direction. One end of the control arm may be rotatably connected to the rear wheel shaft support assembly, and the other end of the control arm may be rotatably connected to the rear frame portion. The rear torsion bar assembly may be located between the second lower rocker arm and the second upper rocker arm. The rear torsion bar assembly may include a rear torsion bar and a rear mounting seat. The rear mounting seat may be fixed on the rear frame portion. The rear torsion bar may be located on the inner side of the rear frame portion and may be rotatably mounted on the rear mounting seat, and both ends of the rear torsion bar may be movably connected to the second upper rocker arm.

The front torsion bar assembly is arranged above the first upper rocker arm and connected to the first upper rocker arm. Therefore, during the force is applied, the reaction force generated by the torsion of the front torsion bar assembly directly apply to the first upper rocker arm, and directly press down the front wheel shaft support assembly through the first upper rocker arm so as to control the two front wheels. In this way, the delivery of force is more direct and the response is faster, which effectively improves the smoothness and stability of the side-by-side utility vehicle.

### BRIEF DESCRIPTION OF THE DRAWINGS

FIG. 1 is a schematic view of an side-by-side utility vehicle according to the embodiments of the disclosure.

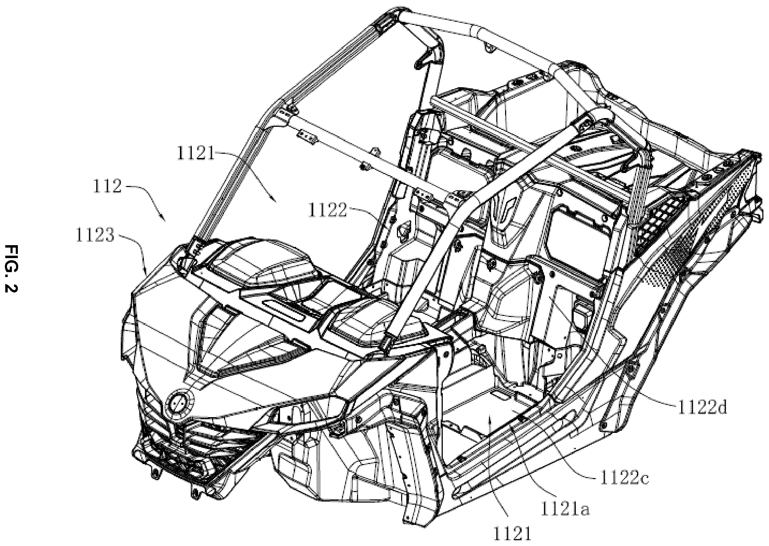

FIG. 2 is a schematic view of structure of a vehicle body according to the embodiments of the disclosure.

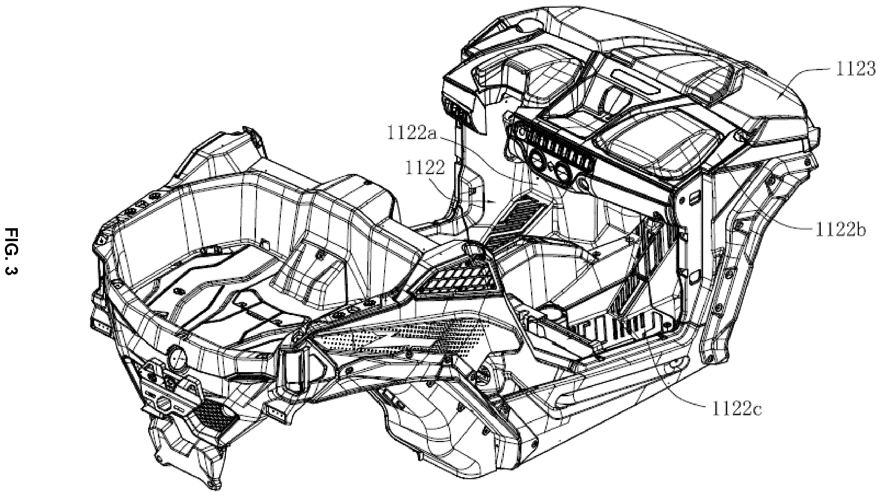

FIG. 3 is a schematic view of structure of the vehicle body according to the embodiments of the disclosure.
FIG. 4 is a schematic view of structure of a frame according to the embodiments of the disclosure.
FIG. 5 is a schematic view of the frame according to the embodiments of the disclosure.
FIG. 6 is a schematic view of the frame according to the embodiments of the disclosure.
FIG. 7 is an enlarged view of part A in FIG. 6.
FIG. 8 is a side view of the middle frame portion according to the embodiments of the disclosure.
FIG. 9 is a schematic view of the frame according to the embodiments of the disclosure from another point of view.
FIG. 10 is an enlarged view of part B in FIG. 9.
FIG. 11 is a schematic view of structure of a front suspension assembly according to the embodiments of the disclosure from a certain point of view.
FIG. 12 is a schematic view of a front suspension assembly according to the embodiments of the disclosure from another point of view.
FIG. 13 is a schematic view of the front supporting plate according to the embodiments of the disclosure.
FIG. 14 is a schematic view of the rear suspension assembly according to the embodiments of the disclosure from a certain point of view.
FIG. 15 is a side view of structure of the rear suspension assembly according to the embodiments of the disclosure.
FIG. 16 is a schematic view of structure of the left-rear wheel shaft support according to the embodiments of the disclosure.
FIG. 17 is a schematic view of the rear suspension assembly according to the embodiments of the disclosure from another point of view.
FIG. 18 is an enlarged view of part C in FIG. 17.
FIG. 19 is a schematic view of a rear suspension assembly in another embodiment.
FIG. 20 is a cross-sectional view of the rear suspension assembly of FIG. 19.
FIG. 21 is a schematic view of the state of the rear wheels when the control arm is at the lowest position.
FIG. 22 is a schematic view of the state of the rear wheels when the control arm is at the highest position.
FIG. 23 is a schematic view showing the distribution of electrical components.
FIG. 24 is a schematic view of the improved mode switch.
FIG. 25 is a cross-sectional view of the mode switch.

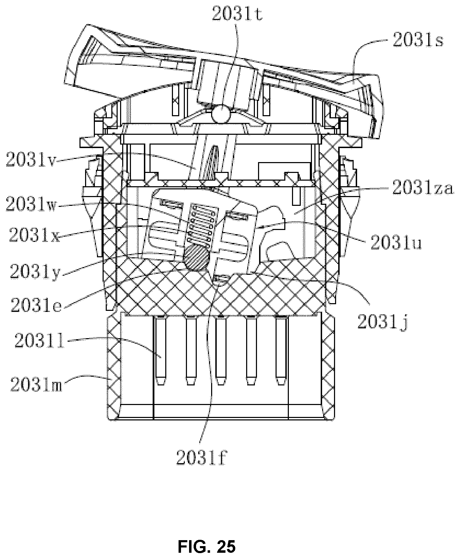

FIG. 25 is a partial enlarged view of the gear position arrangement of the mode switch.

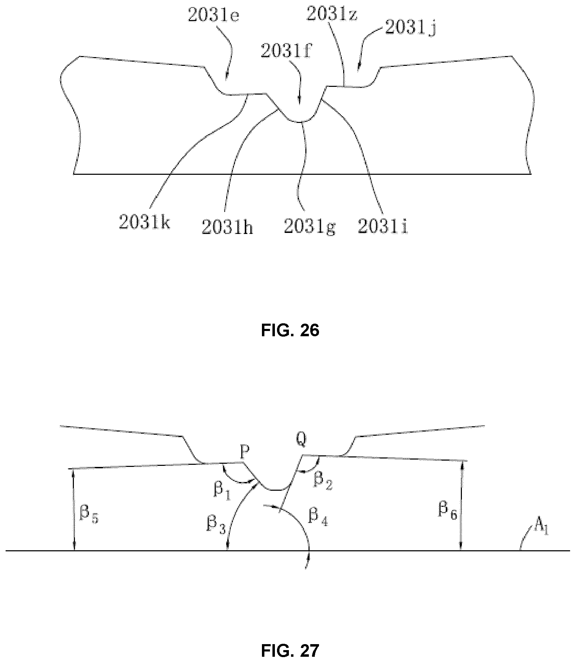

FIG. 27 is a schematic view of the angular relationship between each gear slot.

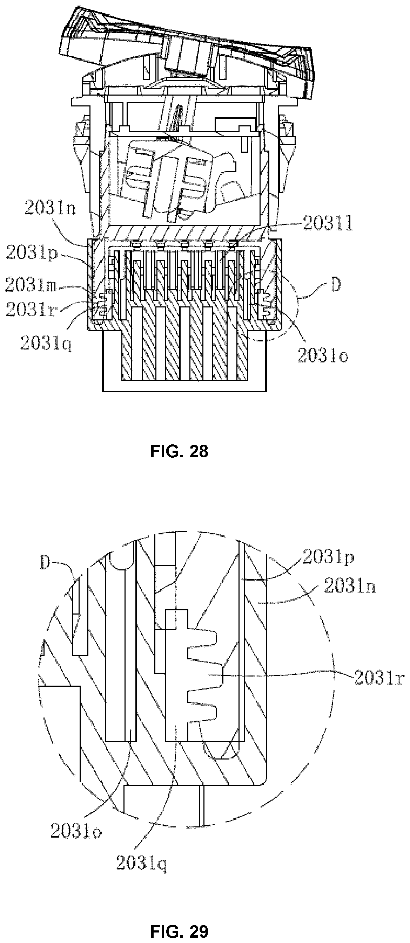

FIG. 28 is a schematic view of the connection between the mode switch and the butt joint.
FIG. 29 is an enlarged view of part D in FIG. 28.

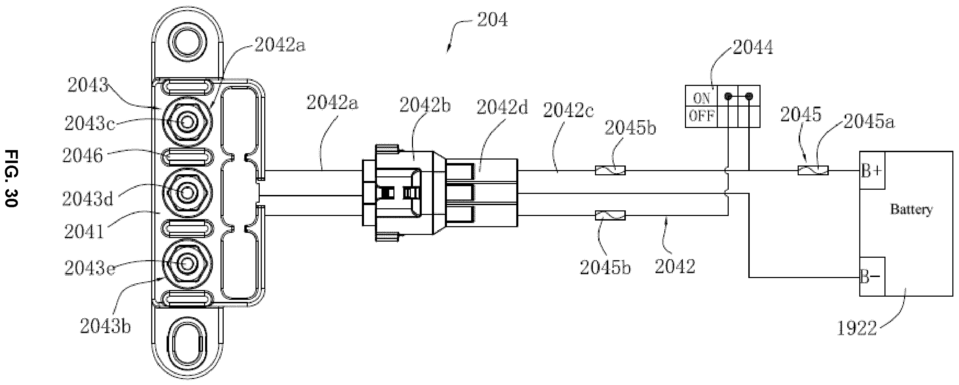

FIG. 30 is a schematic view of the electrical socket assembly.

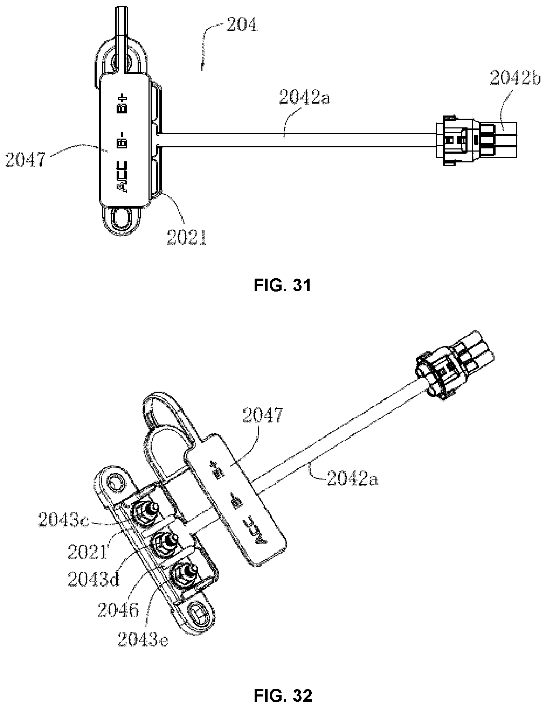

FIG. 31 is a top-view view of the electrical socket assembly.
FIG. 32 is an exploded view of the electrical socket assembly.

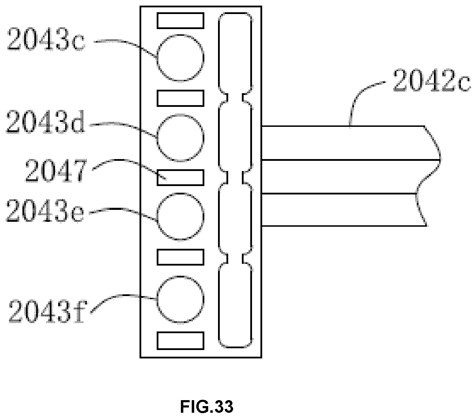

FIG. 33 is a schematic view of an electrical socket assembly according to other embodiments of the disclosure.

### DETAILED DESCRIPTION

For better understanding of the above objects, features and advantages of the present disclosure, the embodiments of the present disclosure will be described in detail below with reference to the accompanying drawings. In the following description, numerous details are set forth in order to for better understanding of the present disclosure. However, the present disclosure may be implemented in many other ways different from those described herein, and those skilled in the art can make similar improvements without departing from the connotation of the present disclosure. Therefore, the present invention is not limited by the embodiments disclosed below.

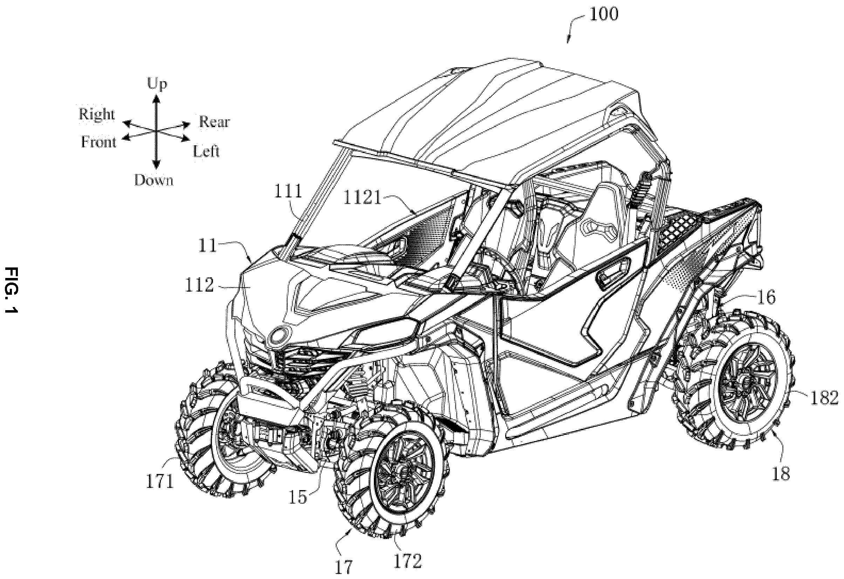

Please refer to FIG. 1, a side-by-side utility vehicle 100 is provided. The side-by-side utility vehicle 100 may travel on beaches, hillsides and deserts. The front end, rear end, upper side, lower side, left side and right side of the side-by-side utility vehicle 100 are defined in FIG. 1. The side-by-side utility vehicle 100 include a frame assembly 11, a front suspension assembly 15, a rear suspension assembly 16, a front wheel assembly 17, and a rear wheel assembly 18. The frame assembly 11 is used for carrying and connecting various components on the side-by-side utility vehicle 100 and bearing various loads from inside and outside the vehicle. The front suspension assembly 15 is disposed adjacent to the front end of the side-by-side utility vehicle 100 and is mounted on the frame assembly 11. The front suspension assembly 15 is connected to the front wheel assembly 17 so as to deliver a force from the front wheel assembly 17 to the frame assembly 11. In addition, the front suspension assembly 15 is capable of buffering the impact force from the uneven road to the frame assembly 11 and other components, so as to reduce the vibration, thereby ensuring that the side-by-side utility vehicle 100 is able to run smoothly and stably. The rear suspension assembly 16 is disposed near the rear end of the side-by-side utility vehicle 100, and is mounted on the frame assembly 11. The rear suspension assembly 16 is connected to the rear wheel assembly 18 to deliver a force from the rear wheel assembly 18 to the frame assembly 11. In addition, the rear suspension assembly 16 is capable of buffering the impact force from the uneven road to the frame assembly 11 and other components, so as to reduce the vibration, thereby ensuring that the side-by-side utility vehicle 100 is able to run smoothly and stably.

The frame assembly 11 may include a frame 111 and a vehicle body 112. The frame 111 may be a frame structure to carry various loads inside and outside the side-by-side utility vehicle 100. The front suspension assembly 15 and the rear suspension assembly 16 are respectively mounted on the front and rear ends of the frame 111. It should be noted that the layout of the front suspension assembly 15 and the rear suspension assembly 16 on the frame 111 may be correspondingly arranged as required. The vehicle body 112 is mounted on the frame 111 and may cover at least part of the frame 111, so as to protect the parts and components on the frame 111. Meanwhile, the vehicle body 112 also serves as a driving place for the driver and a place for accommodating passengers and cargo.

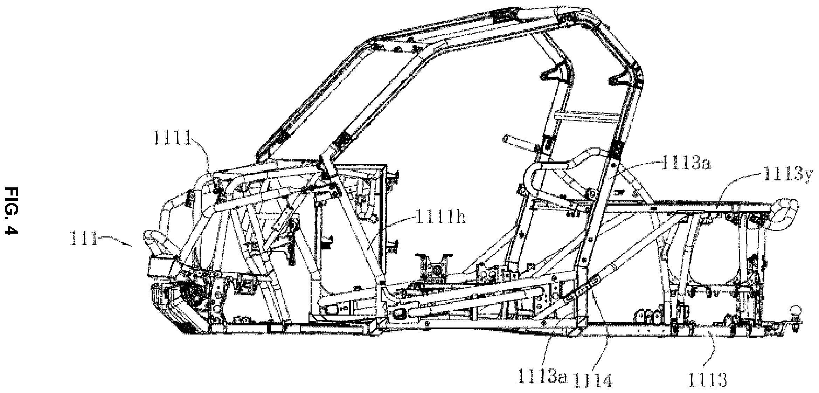

Please refer to FIG. 4, the frame 111 may include a front frame portion 1111, a middle frame portion 1112, and a rear frame portion 1113. The front frame portion 1111 is located at the front end of the side-by-side utility vehicle 100 to carry components correspondingly located at the front end of the side-by-side utility vehicle 100, such as the front suspension assembly 15, headlights, water tanks, and the like. The rear frame portion 1113 is located at the rear end of the side-by-side utility vehicle 100 to carry components correspondingly located at the rear end of the side-by-side utility vehicle 100, such as the rear suspension assembly 16, rear headlights and other components. The middle frame portion 1112 may be connected between the front frame portion 111 and the rear frame portion 113, and is also used for carrying loads. The front frame portion 1111, the middle frame portion 1112 and the rear frame portion 1113 may be surrounded to form an accommodating space 111a. The vehicle body 112 may cover the vehicle frame 111, and the vehicle body 112 may be provided with a cabin 1121. The cabin 1121 serves as a cockpit for drivers and/or passenger compartment for passengers. The cabin 1121 may be partially embedded in the accommodating space 111a, so that the cabin 1121 may obtain a larger space for use when the height of the side-by-side utility vehicle 100 conforms to the standard.

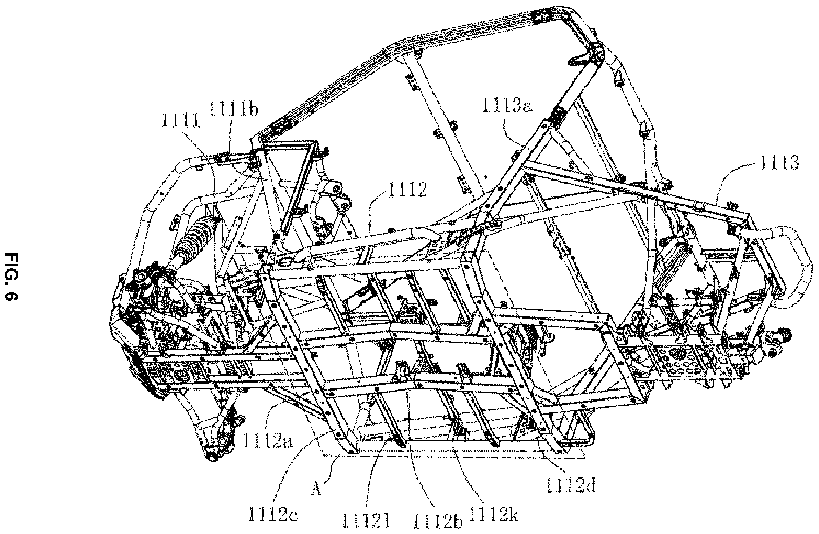

Please refer to FIGs. 6 to 8, the middle frame portion 1112 bears the most loads. The middle frame portion 1112 may include a first type of beams 1112a and a second type of beams 1112b. The first type of beams 1112a and the second type of beams 1112b may be interconnected to substantially form a load bearing structure. In one embodiment, the number of the first type of beams 1112a may be greater than one, and a plurality of the first type of beams 1112a may be spaced apart and substantially located on the same plane. The number of the second type of beams 1112b may also be greater than one, and a plurality of the second type of beams 1112b may be arranged between the plurality of the first type of beams 1112a at intervals. It should be noted that the number of the first type of beams 1112a may be two, three, four, or the like. Similarly, the number of the second type of beams 1112b may be two, three, four, or the like. It should be noted that the number of the first type of beams 1112a and the number of the second type of beams 1112b may be varied depend on the circumstance.

In this embodiment, the first type of beams 1112a may include a first cross beam 1112c and a second cross beam 1112d, and the first cross beam 1112c and the second cross beam 1112d may be substantially located in the same plane S. The second type of beams1112b include a first longitudinal beam 1112e and a second longitudinal beam 1112h. The first longitudinal beam 1112e may be provided near the front end, and the second longitudinal beam 1112h may be provided near the rear end along the front-rear direction of the side-by-side utility vehicle 100. The first longitudinal beam 1112e may include a first rod 1112f and a second rod 1112g. One end of the first rod 1112f may be connected to the first cross beam 1112c, and the other end of the first rod 1112f may extend toward the second cross beam 1112d. An angle between the first rod 1112fand the plane S is A1, and A1 may be in the range from 5° to 15°. One end of the second rod 1112g may be connected to the second cross beam 1112d, and the other end of the second rod 1112g extends towards the first cross beam 1112c and may be connected to the first rod 1112f. An angle between the second rod 1112g and the plane S is A2, and A2 may be in the range from 5° to 15°, so that the bottom of the middle frame portion 112 is raised upwardly away from the driving ground. The distance of the side-by-side utility vehicle 100 from the ground is increased, so that the trafficability of the side-by-side utility vehicle 100 is effectively improved.

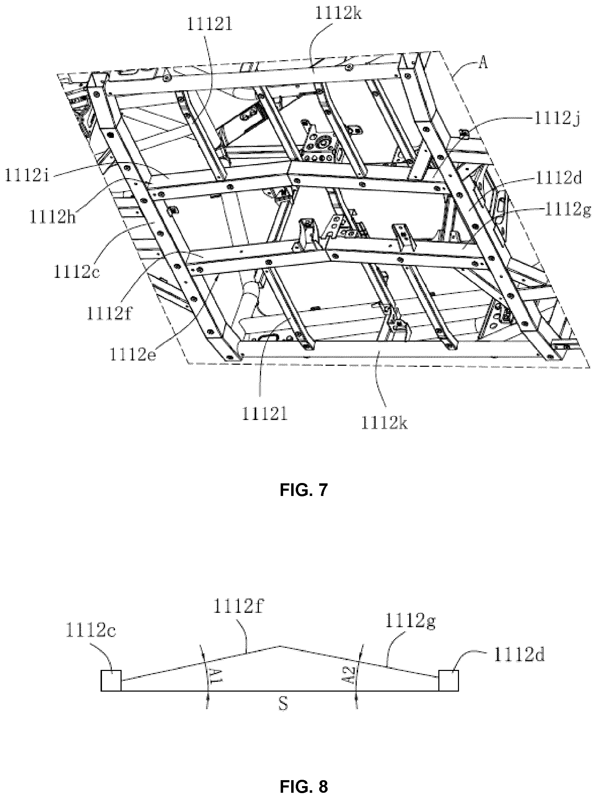

Please refer to FIG. 8, in one embodiment, the angle A1 may be larger than the angle A2, making the side-by-side utility vehicle 100 better pass through the uneven road. The first type of beams 1112a and the second type of beams 1112b may be made of steel pipes, which are easily available from market and are easy to be processed. The first rods 1112f may be welded to the first cross beam 1112c, and the second rods 1112g may be welded to the second cross beam 1112d. The first rods 1112f may be welded to the second rods 1112g. The first rods 1112f of the second type of beams 1112b may be parallel to each other, and the second rods 1112g of the second type of beams 1112b may be arranged parallel to each other. The second longitudinal beam1112h may be include a third rod 1112i and a fourth rod 1112j. The third rod 1112i may be parallel to the first rod 1112f, one end of the third rod 1112i may be connected to the first cross beam 1112c, and the other end of the third rod 1112i extends toward the second cross beam 1112d. The fourth rod 1112j may be parallel to the second rod 1112g, one end of the fourth rod 1112j may be connected to the second cross beam 1112d, and the other end of the fourth rod 1112j extends toward the first cross beam 1112c and may be connected to the third rod 1112i.

Please refer to FIG. 7, the middle frame portion 1112 may further include at least two longitudinal reinforcement pipes 1112k and a plurality of cross reinforcement pipes 11121. In one embodiment, the middle frame portion 1112 may include two longitudinal reinforcement pipes 1112k. The two longitudinal reinforcement pipes 1112k may be spaced apart. The second type of beams 1112b may be mounted between the two longitudinal reinforcement pipes 1112k. One end of each longitudinal reinforcement pipes 1112k may be fixed on the first cross beam 1112c, and the other end may be fixed on the second cross beam 1112d. Each cross reinforcement pipe 1112l may be connected between one of the second type of beams 1112b and the corresponding longitudinal reinforcement pipes 1112k. One end of each cross reinforcement pipes 11121 may be connected to the corresponding longitudinal beam, and the other end may be connected to the corresponding longitudinal reinforcement pipe 1112k. Thus, the longitudinal reinforcement pipes 1112k, the cross reinforcement pipe 11121, the first type of beams 1112a and the second type of beams 1112b together form a mesh-like structure, which effectively improves the structural strength and bearing capacity of the entire middle frame portion 1112.

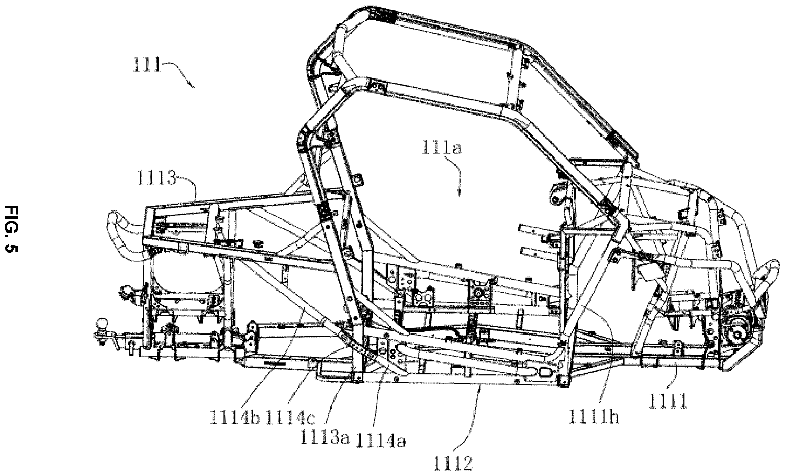

Please refer to FIGs. 4 and 5, the front frame portion 1111 may further include two first pillars 1111h, and the rear frame portion 1113 may further include two second pillar 1113a. The first pillar 1111h and the second pillar 1113a are commonly referred to as A-pillar and B-pillar, respectively. The first pillar 1111h and the second pillar 1113a are used for bearing, supporting the vehicle, and protecting drivers. One end of each first pillar 1111h may be connected to the first cross beam 1112c, and the other end of the first pillar 1111h extends upward. One end of the second pillar 1113a may be connected to the second cross beam 1112d, and the other end of the second pillar 1113a extends upward.

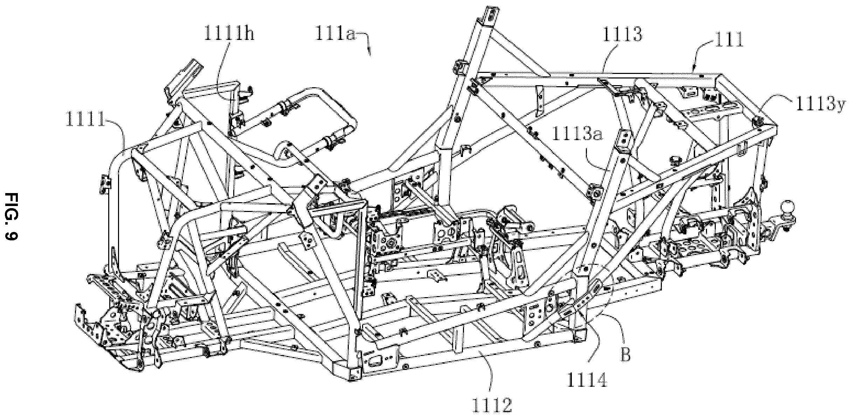

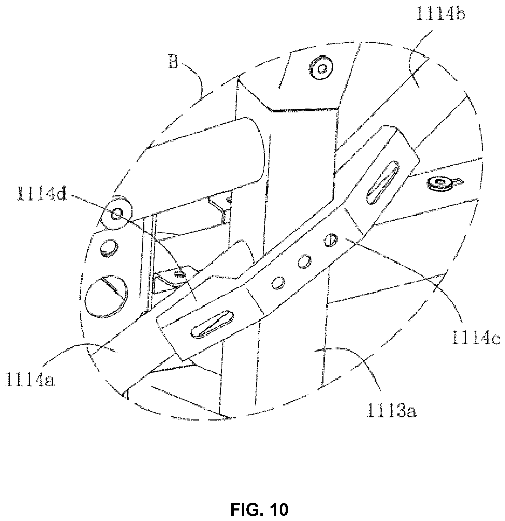

Please refer to FIGs. 9 and 10, in one embodiment, a reinforcement structure 1114 may be arranged between the rear frame portion 1113 and the middle frame portion 1112 to improve the connection strength between the rear frame portion 1113 and the middle frame portion 1112. The reinforcement structure 1114 may include a first reinforcement rod 1114a, a second reinforcement rod 1114b and a reinforcement plate 1114c. One end of the first reinforcement rod 1114a may be connected to one of the longitudinal reinforcement pipes 1112k on the middle frame portion 1112, and the other end may be connected to one of the second pillars 1113a. The rear frame portion 1113 may further include a support bracket 1113y, one end of the second reinforcement rod 1114b may be connected to the support bracket 1113y, and the other end may be connected to one of the second pillars 1113a. One end of the reinforcement plate 1114c may be connected to the first reinforcement 1114a, and the other end of the reinforcement plate 1114c extends toward the rear end of the side-by-side utility vehicle 100 and extends beyond the second pillars 1113a, and may be connected to the second reinforcement rod 1114b. Therefore, a force applied to the second pillars1113a by the first reinforcement rod 1114a and the second reinforcement rod 1114b may be distributed by the reinforcement plate 1114c, avoiding processes such as drilling holes in the two second pillars 1113a, thereby reducing the possibility of local deformation of the second pillars 1113a. It should be noted that although only the connection between the reinforcement rods and the second pillars 1113a may be described herein, such structure may also be used to connect to other pillars, cross beams or longitudinal beams.

The first reinforcement rod 1114a may be welded to one of the second pillars 1113a. The second reinforcement rod 1114b may be welded to one of the second pillars 1113a. The reinforcement plate 1114c may be integrally formed by stamping. The reinforcement plate 1114c may be weld to the first reinforcement rod 1114a and the second reinforcement rod 1114b, respectively. Two ends of the reinforcement plate 1114c may be respectively provided with reinforcement pieces 1114d. Each reinforcement piece 1114d abuts against the corresponding reinforcement rod respectively, so as to increase the contact area between the reinforcement plate 1114c and the first reinforcement rod 1114a and the second reinforcement rod 1114b, thereby improving the connection strength between the reinforcement plate 1114c and the first reinforcement rod 1114a and the second reinforcement rod 1114b.

Please refer to FGS. 2 and 3, the vehicle body 112 may include a plurality of interior trims 1122 and a plurality of exterior trims 1123. The interior trims 1122 may be arranged on the frame 111, and a cabin 1121 may be defined by the frame 111 and the interior trims 1122. That is to say, the interior trims 1122 may be disposed around the cabin 1121. One side of the cabin 1121 may be provided with at least one first opening 1121a, and drivers and passengers may enter and exit the cabin 1121 through the first opening 1121a. The exterior trims 1123 may be located at the front end, the rear end, and the side edges of the frame 111 to shield and protect the front suspension assembly 15, the rear suspension assembly 16, various electrical devices, and the like.

The interior trims 1122 may include a front baffle 1122a, an instrument panel 1122b, footrests 1122c, a rear baffle 1122d, and one or a plurality of seats 1122f. The front baffle 1122a may be disposed close to the front end of the side-by-side utility vehicle 100 to separate the various components at the front end of the side-by-side utility vehicle 100 from the cabin 1121, and to block stones, sediment, and water. The instrument panel 1122b may be mounted on one end away from the ground of the front baffle 1122a, and may be used to carry various instrument devices, such as a display screen, a dashboard, and the like on the vehicle. The footrest 1122c may be mounted at the bottom of the accommodating space 111a, and may be used as a plate to carry various components such as seats 1122f, and as a position where the feet of the drivers or passengers are placed in. The rear baffle 1122d may be disposed close to the rear end of the side-by-side utility vehicle 100 and separates the various components at the rear end of the side-by-side utility vehicle 100 from the cabin 1121. The rear baffle 1122d and the front baffle 1122a may be spaced apart, and the footrests 1122c may be located between the front baffle 1122d and the rear baffle 1122a. Therefore, the cabin 1121 described above may be defined by the front baffle 1122a, the footrests 1122c and the rear baffle 1122d.

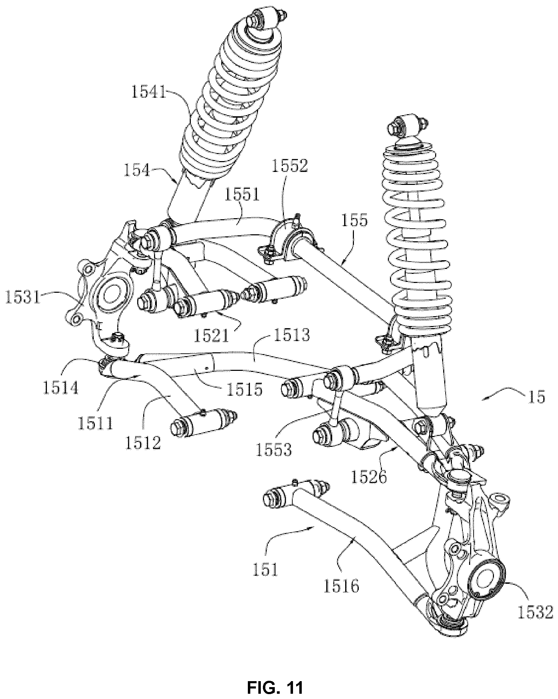

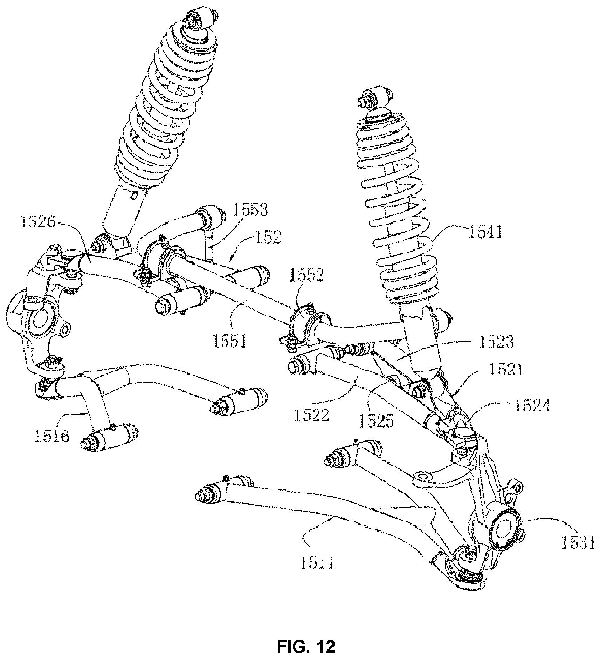

Please refer to FIGs. 11 and 12, the front suspension assembly 15 may include a first lower rocker arm 151, a first upper rocker arm 152, a front wheel shaft support assembly 153, a front shock absorber assembly 154 and a front torsion bar assembly 155. The first lower rocker arm 151 and the first upper rocker arm 152 may be respectively mounted on the vehicle frame 111. The first upper rocker arm 152 may be located above the first lower rocker arm 151 along the vertical direction. The front wheel shaft support assembly 153 may be used to connect the front wheel assembly 17, and the front wheel shaft support assembly 153 may be provided between the first lower rocker arm 151 and the first upper rocker arm 152. The first lower rocker arm 151 and the first upper rocker arm 152 may be respectively rotatably connected to the front wheel shaft support assembly 153. One end of the front shock absorber 154 may be mounted on the first upper rocker arm 152, and the other end may be connected to the frame 111 or other components to buffer and filter the shock caused by the vibration of the front wheel assembly 17. The front torsion bar assembly 155 may be located above the first upper rocker arm 152 along the vertical direction, and the front torsion bar assembly 155 may be rotatably connected to the first upper rocker arm 152, and the front torsion bar assembly 155 may be configured to rotate. The first upper rocker arm 152 may be lifted up to compress the front shock absorber 154 after the front wheel assembly 17 is forced, so that the vibration may be absorbed and filtered by the front shock absorber 154. At the same time, when the first upper rocker arm 152 may be forced to lift upward during the side-by-side utility vehicle 100 is running, the front torsion bar assembly 155 may be driven by the first upper rocker arm 152 to move, preferably to rotate. Therefore, the front torsion bar assembly 155 may be twisted relative to the first upper rocker arm 152, and during the twisting process, a reaction force is applied to the first upper rocker arm 152 to press the front wheel shaft support assembly 153 downward. Therefore, a downward pressing force from the first upper rocker arm 152 is always applied to the front wheel shaft support assembly 153, so as to ensure that the front wheel assembly 17 are able to better contact with the ground. Thus, the overall handling performance is effectively improved, the stability of the vehicle body 112 is ensured and the inclination angle of the vehicle body 112 is reduced when the vehicle is cornering at high speed. Secondly, because the front torsion bar assembly 155 may be connected to the first upper rocker arm 152, during the force is applied, the reaction force generated by the torsion of the front torsion bar assembly 155 directly apply to the first upper rocker arm 152, and directly press down the front wheel shaft support assembly 153 through the first upper rocker arm 152. Therefore, the force is more directly delivered and the response is faster.

Please continue to refer to FIGs. 11 and 12, the first lower rocker arm 151 may include a first left-lower rocker arm 1511 and a first right-lower rocker arm 1516, and the front wheel shaft support 153 may include a left-front wheel shaft support 1531 and a right-front wheel shaft support 1532. One end of the first left-lower rocker arm 1511 may be correspondingly connected to the left-front wheel shaft support 1531, and the other end may be rotatably mounted on the front frame portion 1111. The first right-lower rocker arm 1516 and the first left-lower rocker arm 1511 may be respectively disposed on both sides of the front frame portion 1111 and may be substantially symmetrically.

One end of the first right-lower rocker arm 1516 may be correspondingly connected to the right-front wheel shaft support 1532, and the other end of the first right-lower rocker arm 1516 may be rotatably mounted on the front frame portion 1111. In this embodiment, the structure of the first left-lower rocker arm 1511 is the same as that of the first right-lower rocker arm 1516. Only the first left-lower rocker arm 1511 is thus described as an example showing the structure and function of the lower rocker arms.

The first left-lower rocker arm 1511 may include a first rocker 1512, a second rocker 1513, and a first connecting base 1514. The first connecting base 1514 may be mounted on the wheel shaft support 1531 by a plurality of fasteners such as bolts and screws. One end of the first rocker 1512 may be mounted to the first connecting base 1514, and the other end of the first rocker 1512 may be rotatably connected to the front frame portion 1111. The first rocker 1512 may be arc-shaped and arched upward. The arc-shaped first rocker 1512 may be capable of not only bearing a greater force, but also exerting a greater downward pressure on the left-front wheel shaft support 1531 when the left-front wheel shaft support 1531 moves upward, thereby ensuring the driving stability of the left-front wheel 171. One end of the second rocker 1513 may be connected to the first connecting base 1514, and the other end of the second rocker 1513 may be rotatably connected to the front frame portion 1111. An angle may be defined by the second rocker 1513 and the first rocker 1512. The second rocker 1513 may be also arc-shaped and arched upward, so as to give a greater and downward force to the left-front wheel shaft support 1531, and work together with the first rocker 1512 to ensure the driving stability of the left-front wheel 171.

In one embodiment, the structure, shape and the connection method of the first rocker 1512 may be the same in principle as the second rocker 1513, thereby facilitating processing and cost control. It should be noted that the structure of the first rocker 1512 may be different from the structure of the second rocker 1513 as appropriate.

Please refer to FIGs. 11 and 12, the first left-lower rocker arm 1511 may further include a first connecting rod 1515. The first connecting rod 1515 may be positioned between the first rocker 1512 and the second rocker 1513. In addition, the first rocker 1512 and the second rocker 1513 may be respectively connected to two ends of the first connecting rod 1515 and function together, so as to effectively improve the structural strength and working stability of the first left-lower rocker 1511.

The first upper rocker arm 152 may include a first left-upper rocker arm 1521 and a first right-upper rocker arm 1526. The first left-upper rocker arm 1521 may be located on the same side as the first left-lower rocker arm 1511, and one end of the first left-upper rocker arm 1521 may be correspondingly connected to the left-front wheel shaft support 1531, and the other end may be rotatably connected to the front frame portion 1111. The first right-upper rocker arm 1526 and the first left-upper rocker arm 1521 may be respectively disposed on both sides of the front frame portion 1111 and may be substantially symmetrically. One end of the first right-upper rocker arm 1526 may be correspondingly connected to the right-front wheel shaft support 1532, and the other end of the first right-upper rocker arm 1526 may be rotatably connected to the front frame portion 1111. In this embodiment, the structure of the first left-upper rocker arm 1521 may be the same as that of the first right-upper rocker arm 1526. Only the first left-upper rocker arm 1521 is thus described as an example showing the structure and function of the upper rocker arm.

Please refer to FIG. 12, the first left-upper rocker arm 1521 may include a third rocker 1522, a fourth rocker 1523, a second connecting base 1524, and a second connecting rod 1525. The second connecting base 1524 may be fixed to the left-front wheel shaft support 1531 by fasteners such as bolts and screws. One end of the third rocker 1522 may be mounted to the second connecting base 1524, and the other end of the third rocker 1522 may be rotatably connected to the front frame portion 1111. The third rocker 1522 may be arc-shaped and arched upward. The arc-shaped third rocker 1522 may be capable of not only bearing a greater force, but also exerting a greater downward pressure on the left-front wheel shaft support 1531 when the left-front wheel shaft support 1531 moves upward, thereby ensuring the driving stability of the left-front wheel 171. One end of the fourth rocker 1523 may be rotatably connected to the second connecting base 1524, and the other end of the fourth rocker 1523 may be rotatably connected to the front frame portion 1111. An angle may be defined by the fourth rocker 1523 and the third rocker 1522. The fourth rocker 1523 may also be arc-shaped and arched upward, so as to give a greater and downward force to the left-front wheel shaft support 1531, and work together with the third rocker 1522 to ensure the driving stability of the left-front wheel 171. The second connecting rod 1525 may be provided between the third rocker 1522 and the fourth rocker 1523. In addition, the third rocker 1522 and the fourth rocker 1523 may be respectively connected to two ends of the first connecting rod 1525 and function together, so as to effectively improve the structural strength and working stability of the first left-upper rocker 1521.

The third rocker 1522 may be the same in principle as the fourth rocker 1523, thereby facilitating processing and cost control. It should be noted that the structure of the third rocker 1522 may be different from the structure of the fourth rocker 1523 as appropriate.

Please refer to FIG. 12, the front shock absorber assembly 154 may include two front shock absorbers 1541, and the two front shock absorbers 1541 may be respectively mounted on the first left-upper rocker arm 1521 and the first right-upper rocker arm 1526 to absorb and buffer the impact of the left-front wheel 171 and the right-front wheel 172, respectively. The number of the front shock absorbers 1541 is not limited to two, but may be one, three, or the like. The number can be increased/decreased according to the requirements of front shock absorption. Moreover, structure and operating principle of the front shock absorber 1541 are well-known, and will not be described in detail.

Please refer to FIGS. 11 and 12, the front torsion bar assembly 155 may include a front torsion bar 1551, a front mounting seat 1552, two front connecting rods 1553, and a front support 1554. The front mounting seat 1552 may be mounted on the front support 1554, which may be fixed to the front frame portion 1111. The front torsion bar 1551 may be rotatably connected to the front mounting seat 1552. One end of the front torsion bar 1551 may correspond to one of the front connecting rods 1553 and may be mounted on the left-upper rocker arm through the front connecting rod 1553. This front connecting rod 1553 may be movably connected to the left-upper rocker arm and the front torsion bar 1551. The other end of the front torsion bar 1551 may correspond to the other front connecting rod 1553, and may be mounted on the first right-upper rocker arm 1526 through the front connecting rod 1553. This front connecting rod 1553 may be movably connected to the first right-upper rocker arm 1526 and the front torsion bar 1551. In one embodiment, the front connecting rod 1553 may be connected to the first left-upper rocker arm 1521/the first right-upper rocker arm 1526 by ball pins. The front connecting rod 1553 and the front torsion bar 1551 may also be connected by ball pins. It should be noted that the ball pin connection is only one of the embodiments, and it may also be connected by bearings.

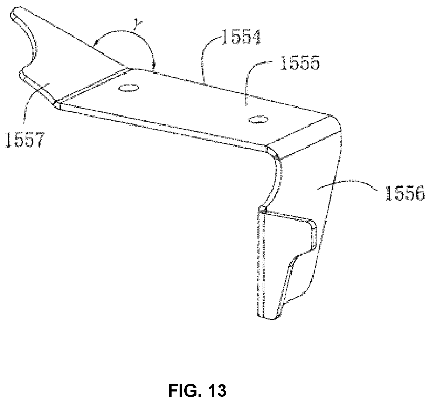

Please refer to FIG. 13, the front support 1554 may include a front supporting plate 1555, a first extending wall 1556 and a second extending wall 1557. The first extending wall 1556 and the second extending wall 1557 may be located at two ends of the front supporting plate 1555, respectively. The front mounting seat 1552 may be fixed on the front supporting plate 1555 by bolts or the like. One end of the first extending wall 1556 away from the front supporting plate 1555 may be connected to the first upper rocker arm 152, and the other end of the first extending wall 1556 may be connected to the front frame portion 1111. After the front torsion bar 1551 is forced, the load can be delivered to the first upper rocker arm 152 by the first extending wall 1556, and may also be delivered to the front frame portion 1111 by the second extending wall 1557. In this way, the delivery path of the load is increased. In one embodiment, the angle between the second extending wall 1557 and the front supporting plate 1555 is defined as γ, and γ may be in the range from 30° to 50°. Within this range, the stress value between the second extending wall 1557 and the front support 1554 is smaller, which is favorable for the connection between the second extending wall 1557 and the frame 111.

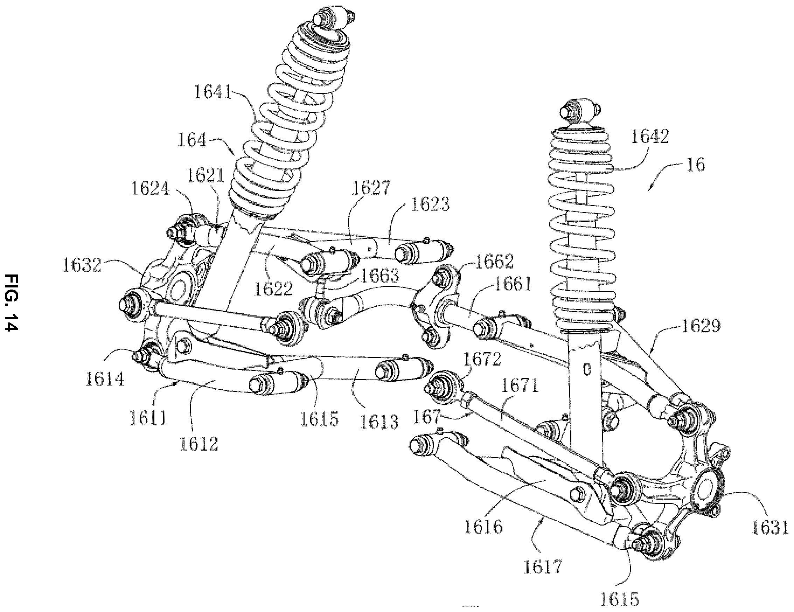

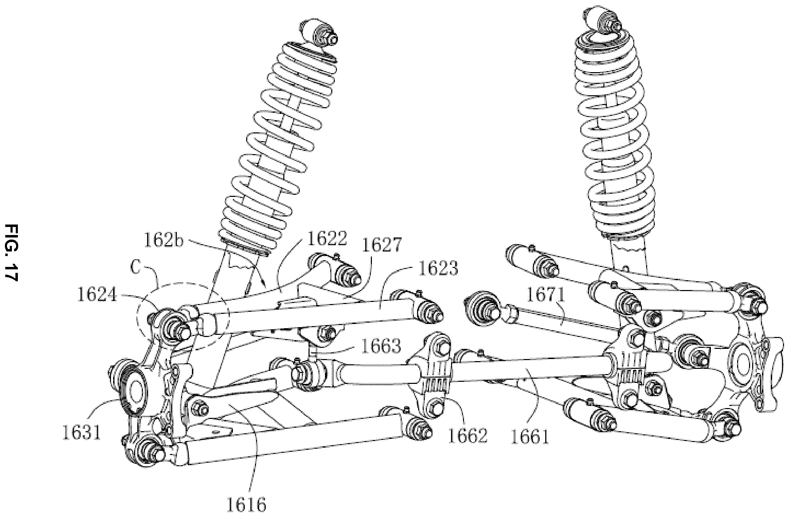

Please refer to FIGs. 14 and 17, the rear suspension assembly 16 may be mounted on the rear frame portion 1113 and connected to the rear wheel assembly 18 to buffer and filter vibrations caused by the rear wheel assembly 18. The rear suspension assembly 16 may include a second lower rocker arm 161, a second upper rocker arm 162, a rear wheel shaft support assembly 163, a rear shock absorber assembly 164 and a rear torsion bar assembly 166. The second lower rocker arm 161 and the second upper rocker arm 162 may be respectively mounted on the vehicle frame 111. The second upper rocker arm 162 may be located above the second lower rocker arm 161 in the vertical direction. The rear wheel shaft support assembly 163 may be used for connecting the rear wheel assembly 18, and the rear wheel shaft support assembly 163 may be arranged between the second lower rocker arm 161 and the second upper rocker arm 162. The second lower rocker arm 161 and the second upper rocker arm 162 may be respectively rotatably connected to the rear wheel shaft support assembly 163. One end of the rear shock absorber assembly 164 may be mounted on the second lower rocker arm 161, and the other end of the rear shock absorber assembly 164 may be connected to the frame 111 or other components for buffering or absorbing vibration. The rear torsion bar assembly 166 may be rotatably connected to the second upper rocker arm 162. In the case that the rear wheel assembly 18 is forced, the second lower rocker arm 161 is lifted up and the rear shock absorber assembly 164 is compressed, so that the vibration is absorbed and filtered by the rear shock absorber assembly 164. At the same time, the second upper rocker arm 162 is also be lifted up, and the rear torsion bar assembly 166 moves under the driving of the second upper rocker arm 162. The rear torsion bar assembly 166 may be twisted relative to the second upper rocker arm 162, and during the twisting process, a force in the opposite direction may be applied to the second upper rocker arm 162 to press down the rear wheel shaft support assembly 163. Therefore, a downward pressing force from the second upper rocker arm 162 is always applied to the rear wheel shaft support assembly 163, so as to ensure that the rear wheel shaft support assembly wheel assembly 18 are able to better contact with the ground. Thus, the overall handling performance is effectively improved, the stability of the vehicle body 112 is ensured and the inclination angle of the vehicle body 112 is reduced when the vehicle is cornering at high speed. Moreover, the rear torsion bar assembly 166 may be connected to the second upper rocker arm 162. The reaction force generated by the torsion of the rear torsion bar assembly 166 is directly applied to the second upper rocker arm 162, and the front wheel shaft support assembly 162 is directly pressed down by the second upper rocker arm 162. Therefore, the force is more directly delivered and the response is faster.

Please refer to FIGs. 14 and 17, the second lower rocker arm 161 may include a second left-lower rocker arm 1611 and a second right-lower rocker arm 1617. The rear wheel shaft support assembly 163 may include a left-rear wheel shaft support 1631 and a right-rear wheel shaft support 1632. The rear shock absorber assembly 164 may include a left-rear shock absorber 1641 and a right-rear shock absorber 1642. One end of the second left-lower rocker arm 1611 may be correspondingly connected to the left-rear wheel shaft support 1631, and the other end of the second left-lower rocker arm 1611 may be rotatably mounted on the rear frame portion 1113. The second right-lower rocker arm 1617 and the second left-lower rocker arm 1611 may be respectively disposed on both sides of the rear frame portion 1113 and may be substantially symmetrical. One end of the second right-lower rocker arm 1617 may be correspondingly connected to the right-rear wheel shaft support 1632, and the other end of the second right-lower rocker arm 1617 may be rotatably mounted on the rear frame portion 1113. One end of the left-rear shock absorber 1641 may be mounted on the second left-lower rocker arm 1611, and the other end of the left-rear shock absorber 1641 extends upward and may be connected to the rear frame portion 1113 for absorbing and buffering the impact and vibration of the left-rear wheel 181 or the left-hand areas. One end of the right-rear shock absorber 1642 may be mounted on the second right-lower rocker arm 1617, and the other end of the right-rear shock absorber 1642 extends upward and may be connected to the rear frame portion 1113 for absorbing and buffering the impact and vibration of the right-rear wheel 182 or the left-hand areas. The structure and operating principle of the left-rear shock absorber 1641 or the right-rear shock absorber 1642 are well-known, and will not be described in detail.

In one embodiment, the structure of the second left-lower rocker arm 1611 may be the same as that of the second right-lower rocker arm 1617. The second left-lower rocker arm 1611 is thus described as an example demonstrating the structure, function, position, and connection method (with other components, such as frame 11 or rear shock absorber assembly) of the second lower rocker arm 161.

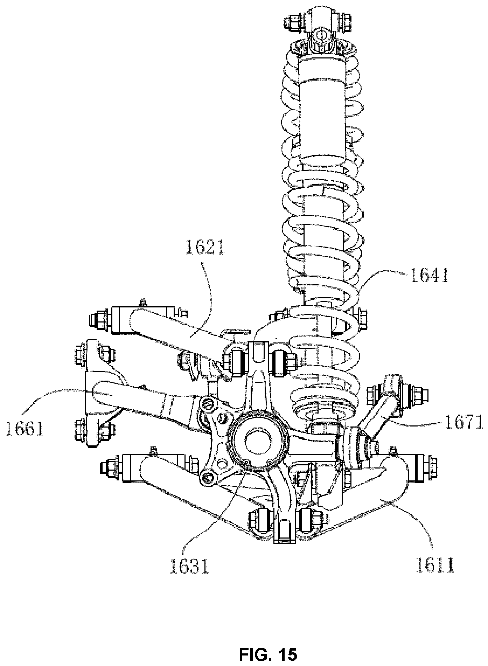

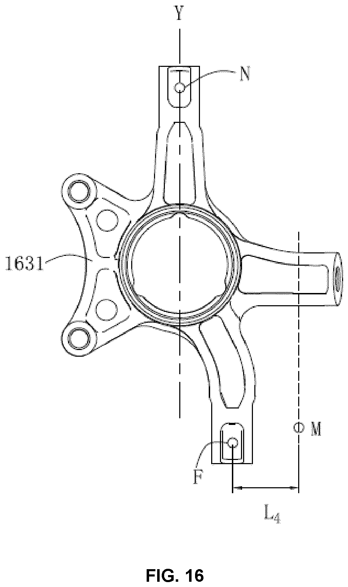

Please refer to FIGs. 14 to 16, the left-rear shock absorber 1641 may be mounted on the second left-lower rocker arm 1611. The connection between the end of the second left-lower rocker arm 1611 away from the rear frame portion 1113 and the left-rear wheel shaft support 1631 is defined as a first connection point F. The connection between the end of the second left-upper rocker arm 1621 away from the rear frame portion 1113 and the left-rear wheel shaft support 1631 is defined as a second connection point N. The connection between the left-rear shock absorber 1641 and the second left-lower rocker arm 1611 is defined as a third connection point M. The first connection point F and the second connection point N may not coincide along the vertical direction. The first connection point F may be close to the connection between the left-rear shock absorber 1641 and the second left-lower rocker arm 1611 in the front-rear direction of the side-by-side utility vehicle 100. A straight line Y is defined by connecting the point N and the center point of the left-rear wheel shaft support 1631. The distance L4 from the first connection point F to the straight line Y may be in the range from 20 mm to 40 mm. The first connection point F is not on the straight line Y and may be close to the third connection point M. The point of force in the left-rear shock absorber 1641 is closer to the left-rear wheel shaft support, and the moment arm of force between the point of force and the first connection point F is reduced. The force is delivered to the left-rear wheel shaft support 1631, so the force applied to the second left-lower rocker arm 1611 is shared by the left-rear wheel shaft support 1631. Therefore, the second left-lower rocker arm 1611 can more easily meet the use requirements and the cost can be reduced.

Please continue to refer to FIGS. 14 and 17, the second left-lower rocker arm 1611 may include a fifth rocker 1612, a sixth rocker 1613, a third connecting base 1614 and at least one third connecting rod 1615. The third connecting base 1614 may be mounted on the left-rear wheel shaft support 1631 by bolts, screws, and the like. One end of the fifth rocker 1612 may be mounted to the first connecting base 1514, and the other end of the fifth rocker 1612 may be rotatably connected to the front frame portion 1113. One end of the sixth rocker 1613 may be connected to the third connecting base 1614, and the other end of the sixth rocker 1613 may be rotatably connected to the rear frame portion 1113. In addition, an angle is defined by the sixth rocker 1613 and the fifth rocker 1612. The fifth rocker 1612 and the sixth rocker 1613 may also be directly and rotatably connected to the left-rear wheel shaft support 1631. The third connecting rod 1615 may be provided between the fifth rocker 1612 and the sixth rocker 1613. In addition, the fifth rocker 1612 and the sixth rocker 1613 may be respectively connected to two ends of the third connecting rod 1615 and function together, so as to effectively improve the structural strength and working stability of the second left-upper rocker 1611.

The second left-lower rocker arm 1611 may further include a shock absorbing plate 1616, and the shock absorbing plate 1616 may be disposed on the fifth rocker 1612, the sixth rocker 1613, or the third connecting rod 1615. One end of the left-rear shock absorber 1641 may be hinged on the shock absorbing plate 1616, and the other end extends upward and may be connected to the rear frame portion 1113. The shock absorbing plate 1616 may also be connected to the fifth rocker 1612 and the sixth rocker 1613, or the fifth rocker 1612 and the third connecting rod 1615 at the same time, so as to share the force together when the suspension is forced, so as to avoid the deformation of the connecting rod or rocker due to only one rocker being forced. The example above is only illustrative of several installation methods of the shock absorbing plate 1616, and several modifications and improvements can be made without departing from the concept of the present application, which all belong to the scope of the present application.

Please refer to FIG. 14 and FIG. 17, the second upper rocker arm 162 may include a second left-upper rocker arm 1621 and a second right-upper rocker arm 1629. The second left-upper rocker arm 1621 and the second left-lower rocker arm 1611 may be on the same side, and one end of the second left-upper rocker arm 1621 may be correspondingly connected to the left-front wheel shaft support 1531, and the other end may be rotatably connected to the front frame portion 1113. The second right-lower rocker arm 1629 and the second left-lower rocker arm 1621 may be respectively disposed on both sides of the rear frame portion 1113 and may be substantially symmetrical. One end of the second right-upper rocker arm 1629 may be correspondingly connected to the right-front wheel shaft support 1632, and the other end of the second right-upper rocker arm 1629 may be rotatably connected to the front frame portion 1113. In this embodiment, the structure of the second left-upper rocker arm 1621 may be the same as that of the second right-upper rocker arm 1629. Only the second upper rocker arm 1621 is thus described as an example showing the structure and function of the upper rocker arm.

The second left-upper rocker 1621 may include a seventh rocker 1622, an eighth rocker 1623, a fourth connecting base 1624, and a fourth connecting rod 1627. The fourth connecting base 1624 may be rotatably mounted on the left-rear wheel shaft support 1631 by bolts, screws, and the like. One end of the seventh rocker 1622 may be connected to the fourth connecting base 1624, and the other end of the seventh rocker 1622 may be rotatably connected to the rear frame portion 1113. One end of the eighth rocker 1623 nay be mounted on the fourth connecting base 1624, and the other end of the eighth rocker 1623 may be rotatably connected to the rear frame portion 1113. The eighth rocker 1623 corresponds to the seventh rocker 1622, and the eighth rocker 1623 and the seventh rocker 1622 may be located on the same plane and define an angle. In other embodiments, the seventh rocker 1622 and the eighth rocker 1623 may be directly and rotatably connected to the left-rear wheel shaft support 1631. The seventh rocker 1622 and/or the eighth rocker 1623 may be arc-shaped, and the arc-shaped seventh rocker 1622 may be bent towards the eighth rocker 1623, or the eighth rocker 1623 may be bent towards the seventh rocker 1622 to form an avoidance space 1621f. The left-rear shock absorber 1641 may extend upward through the avoidance space 1621f. The fourth connecting rod 1627 may be provided between the seventh rocker 1622 and the eighth rocker 1623. The seventh rocker 1622 and the eighth rocker 1623 may be respectively connected to two ends of the fourth connecting rod 1627 and function together, so as to effectively improve the structural strength and working stability of the second left-upper rocker 1621.

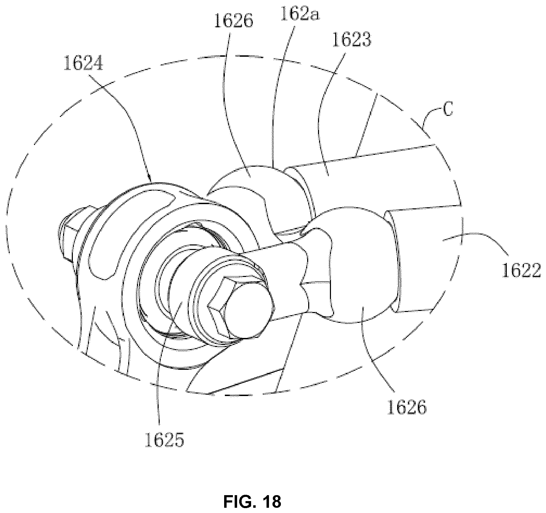

Please refer to FIG. 17 and FIG. 18, the fourth connecting base 1624 may include a support arm part 1625 and a fifth connecting part 1626. One end of the support arm part 1625 may be rotatably connected to the left-rear wheel shaft support 1631, and the other end may be connected to the fifth connecting part 1626. At least part of the outer surface of the fifth connecting part 1626 may have a curved surface 162a. The seventh rocker 1622 and the eighth rocker 1623 may be respectively welded to the curved surface 162a. It should be noted that the curved surface 162a and each rocker welding position may be welded within the range of the curved surface 162a at any angle according to requirements. That is to say, the fourth connecting base 1624 can be adapted to the different rockers with requirements by providing a curved surface 162a of the fifth connecting portion 1626, thereby improving the versatility of the product and effectively reducing the cost. In one embodiment, the curved surface 162a may be a spherical surface.

In one embodiment, the fourth connecting base may include two support arm parts 1625, and a support space is defined between the two support arm parts 1625. A part of the left-rear wheel shaft support 1631 may be located in the support space, and the support arm parts 1625 and the left-rear wheel shaft support 1631 may be rotatably connected by pins or bolt coupling sleeves. The fourth connecting base may include two fifth connecting parts 1626, and the two fifth connecting parts 1626 may be connected to each other, and the two arm parts 1625 may be correspondingly connected to the two fifth connecting parts 1626. The fifth connecting parts 1626 may be spherical, that is to say, the curved surface may be spherical surface, so as to further improve the applicable area of the outer surface of the fifth connecting parts 1626, thereby increasing the weldable angle between the fifth connecting parts 1626 and the rockers, and improving the versatility of the fourth connecting bases 1624.

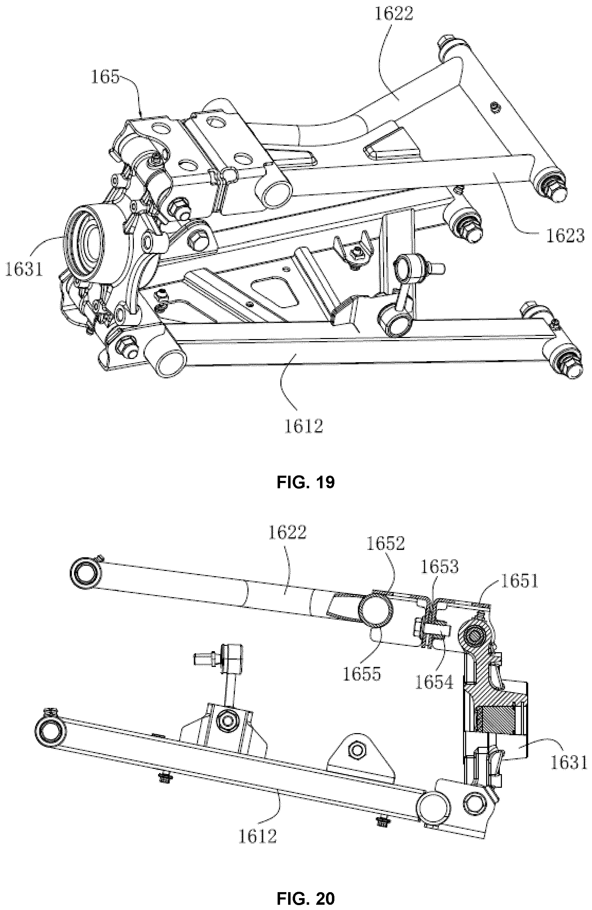

In another embodiment, please refer to FIG. 19, the rear suspension assembly 16 may further include an adjustment assembly 165, which may be provided between the rear wheel shaft support assembly 163 and the second upper rocker arm 162/the second lower rocker arm 161 to adjust the camber angle of the rear wheel shaft support assembly 163, which enables the side-by-side utility vehicle 100 meet the current use requirements. The camber angle may be adjusted by the adjustment assembly 165 to ensure the accuracy of the parameters if camber angle does not meet the requirements due to processing errors when the all -terrain vehicle 100 is sold.

In one embodiment, the rear suspension assembly 16 may include two adjustment assemblies 165. One adjustment assembly 165 may be provided between the second left-upper rocker arm 1621 and the left-rear wheel shaft support 1631 to adjust the camber angle of the left-rear wheel shaft support 1631, and the other adjustment assembly 165 may be provided between the second right-upper rocker arm 1629 and the right-rear wheel shaft support 1632 to adjust the camber angle of the right-rear wheel shaft support 1632. Therefore, the camber angles of the left-rear wheel 181 and the right-rear wheel 182 can be adjusted. Alternatively, one of the adjustment assemblies 165 may be provided between the second left-lower rocker arm 1611 and the left-rear wheel shaft support 1631, and the other may be provided between the second right-lower rocker arm 1617 and the left-rear wheel shaft support 1631. It should be noted that the adjustment assembly 165 may also be applied to the position corresponding to the front suspension assembly 15 to adjust the camber angles of the left-front wheel 171 and the right-front wheel 172.

Please refer to FIG. 20, each adjustment assembly 165 may include a first seat body 1651, a second seat body 1652, an adjustment piece 1653, and a third fastener 1654. The first seat body 1651 may be rotatably connected to the left-rear wheel shaft support 1631 or the right-rear wheel shaft support 1632. The second seat body 1652 may be connected to the second left-upper rocker arm 1621/the second right-upper rocker arm 1629. The adjustment piece 1653 may be provided between the first seat body 1651 and the second seat body 1652, and may be used to adjust the gap between the first seat body 1651 and the second seat body 1652, so as to adjust the overall length of the second left-upper rocker arm 1621, so as to adjust the corresponding camber angle. The third fastener 1654 is used to lock the adjusted first seat body 1651 and the adjusted second seat body 1652; or to unlock the first seat body 1651 and the second seat body 1652.

In one embodiment, the first seat body 1651 and the second seat body 1652 may be both hollow. One end of the third fastener 1654 may pass from the interior of the second seat body to the interior of the first seat body. The adjustment piece 1653 may be C-shaped or U-shaped, so that the C-shaped or U-shaped adjustment piece 1653 may be able to be directly clamped on the third fastener 1654. Therefore, the gap between the first seat body 1651 and the second seat body 1652 can be adjusted without removing the third fastener 1654, which is more convenient. The adjustable range of the gap between the first seat body 1651 and the second seat body 1652 may be less than or equal to 5 cm. The third fastener 1654 may be a bolt. The bolt may pass through the first seat body 1651 to the second seat body 1652 and may be connected to a nut, and the adjustment piece may be sleeved on the bolt.

An arc-shaped slot 1655 may be provided on the second seat body 1652. The second left-upper rocker arm 1621 may further include a connecting pipe 1628, and the seventh rocker 1622 and the eighth rocker 1623 may be respectively welded to the connecting pipe 1628. A part of the connecting pipe 1628 may be embedded in the arc-shaped slot 1655 and welded to the second seat body 1652, thereby increasing the contact area between the connecting pipe 1628, the second left-upper rocker arm 1621 and the second seat body 1652, further improving the connection strength between the connecting pipe 1628 and the second seat body 1652.

Please refer to FIGs. 14 and 17, the rear torsion bar assembly 166 may include a rear torsion bar 1661, a rear mounting seat 1662, and two rear connecting rods 1663. The rear mounting seat 1662 may be fixed to the rear frame portion 1113 or to components, such as the vehicle body 112. The rear torsion bar 1661 may be rotatably connected to the rear mounting seat 1662. One end of the rear torsion bar 1661 may correspond to one of the rear connecting rods 1663 and may be mounted on the left-upper rocker arm by the rear connecting rod 1663. The rear connecting rod 1663 may be movably connected to the second left-upper rocker arm 1621 and the rear torsion bar 1661. The other end of the rear torsion bar 1661 may correspond to the other front connecting rod 1663, and may be mounted on the second right-upper rocker arm 1629 by the rear connecting rod 1663. The rear connecting rod 1663 may be movably connected to the second right-upper rocker arm 1629 and the rear torsion bar 1661. In one embodiment, the front connecting rod 1663 may be connected to the second left-upper rocker arm 1621/the second right-upper rocker arm 1661 by ball pins. It should be noted that the ball pin connection is only one of the embodiments, and it may also be connected by bearings.

The rear frame portion 1113 may include an inner side toward the front frame portion 1111 and an outer side away from the front frame portion 1111. The rear torsion bar assembly 166 may be located on the inner side of the rear frame portion 1113. The rear torsion bar 1661 may be located on the inner side of the rear frame portion 1113, so as to make the entire rear suspension assembly 16 more compact, to reduce the protrusion of the rear torsion bar 1661, and to improve the integrity and aesthetics when viewed from the rear end to the front end of the side-by-side utility vehicle 100. Moreover, the rear torsion bar 1661 may be placed on the inner side of the rear frame portion 1113 to reduce the interference of the rear torsion force with the installation of other components. In addition, the rear torsion bar 1661 is also protected by the rear frame portion 1113. The force may be applied to the rear frame portion 1113 firstly, so as to avoid deformation of the rear torsion bar 1661.

Please refer to FIGs. 14 and 17, the rear suspension assembly 16 may further include a control arm assembly 167. The control arm assembly 167 may be located on the outer side of the rear frame portion 1113, and the position of the control arm assembly 167 may be opposite to the position of the rear torsion bar assembly 166. The control arm assembly 167 may be located between the second lower rocker arm 161 and the second upper rocker arm 162. One end of the control arm assembly 167 may be rotatably connected to the rear wheel shaft support assembly 163, and the other end of the control arm assembly 167 may be rotatably connected to the frame 111. In this way, during the rear suspension assembly 16 is forced and lifted up, the control arm assembly 167 will also be lifted up. Therefore, the rear wheel shaft support assembly 163 may be driven to swing along the movement track of the control arm assembly 167, so as to change the camber angle of the corresponding rear wheel, thereby improving wheel steering and trafficability of the vehicle. At the same time, under the guidance of the control arm assembly 167, it always has a pulling force on the rear wheel shaft support assembly 163, so that the vehicle tends to be stable.

In one embodiment, the rear suspension assembly 16 may include two adjustment assemblies 167. One of the control arm assemblies 167 may be located between the second left-lower rocker arm 1611 and the second left-upper rocker arm 1621, and may be rotatably connected to the rear frame portion 1113 and the left-rear wheel shaft support 1631, respectively. The other control arm assembly 167 may be located between the second right-lower rocker arm 1617 and the second right-upper rocker arm 1629, and may be rotatably connected to the rear frame portion 1113 and the right-rear wheel shaft support 1632, respectively, so as to realize the adjustment of the left-rear wheel 181 and the right-rear wheel 182, respectively.

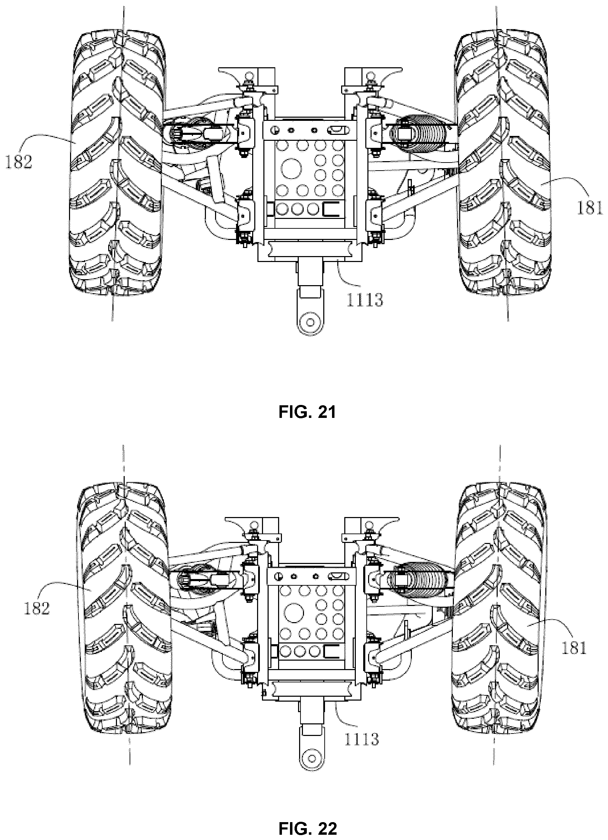

The control arm assembly 167 may include a control arm 1671 and two rotating bases 1672, which are fixed to the rear frame portion 1113 and the rear wheel shaft support assembly 163, respectively. The control arm 1671 may be rotatably connected to the rotating bases 1672. The control arm 1671 may be a rigid arm. The control arm 1671 and the rotating bases 1672 may be rotatably connected by ball pins to realize relative rotation and swing between the control arm 1671 and the rear frame portion 1113. Of course, other connection methods, such as joint bearing connection may also be used in addition to the ball pin connection mentioned above. The control arm 1671 may be relatively located on the side of the left-rear wheel shaft support 1631 near the front end. The control arm 1671 may have a lowest position and an highest position along the vertical axis. FIG. 21 shows the state of the rear wheels when the control arm 1671 is at the lowest position. FIG. 22 shows the state of the rear wheels when the control arm 1671 is at the highest position. When the rear suspension assembly 16 is forced, the left-rear wheel shaft support 1631 and/or the right-rear wheel shaft support 1632 will expand or contract under the control of the control arm 1671, so that the position of each rear wheel may be adjusted between the lowest position and the highest position, so that the toe-in value of the rear wheels can be maintained within a range conducive to the driving of the side-by-side utility vehicle 100, thereby assisting the steering and enabling the side-by-side utility vehicle 100 to have better trafficability. The technical features of the above embodiments can be combined arbitrarily. In order to simplify the description, all possible combinations of the technical features in the above embodiments have not been described. However, as long as there is no contradiction between the combinations of these technical features, they should be considered to be within the scope of the description.

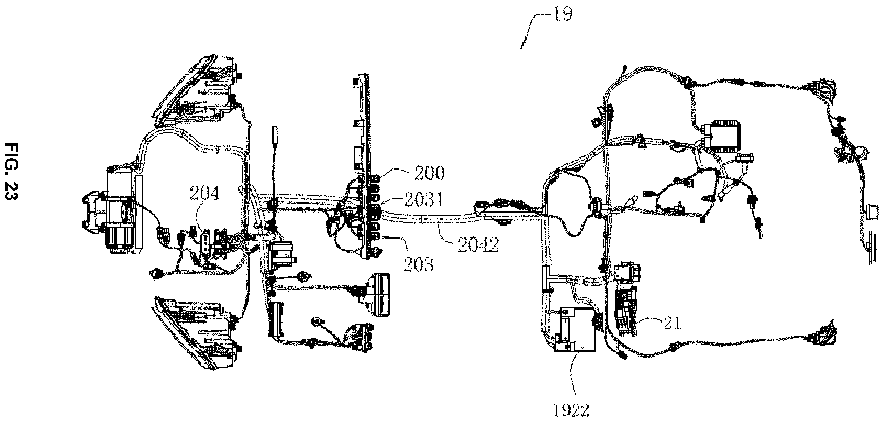

Please refer to FIG. 23, the side-by-side utility vehicle 100 may further include a plurality of electrical components 19 and an electronic controller 21. The electrical components 17 and the electronic controller component 21 may be mounted on the frame assembly 11, and the electrical components 19 may be at least partially connected (electrically/signally) to the electronic controller 21 to enable the basic electrical functions of the side-by-side utility vehicle 100. The electronic controller (referred to as ECU hereinafter) 21 is also referred to as "travelling computer", and is used to monitor various input data (such as braking data, gear shifting data, etc.) and various states of vehicle operation (such as acceleration, skidding, fuel consumption, etc.); calculate the information transmitted by various sensors according to a predesigned program; send various parameters (after processed) to various relevant actuators, such as electrical components 19; and perform various predetermined control functions.

In one embodiment, the electrical components 19 may include instrument and apparatus 200 and a plurality of switches 203. The instrument and apparatus 200 may include various electrical instruments, such as an ammeter, a charging indicator or a voltmeter, an oil pressure gauge, a thermometer, a fuel gauge, a vehicle speed and odometer, an engine tachometer, and the like. The instrument and apparatus 200 may be mainly used to display the status of relevant devices during the driving of the side-by-side utility vehicle 100. A warning indicator 201 may be mainly used to generate sound to prompt or warning. The plurality of switches 203 may include a mode switch 2031, an air conditioning switch (not shown), a temperature adjustment switch (not shown), and the like. The mode switch 2031, the air conditioning switch, and the temperature adjustment switch may be generally mounted on a instrument panel 1122b for the convenience of driver and front passenger. The mode switch 2031, the air conditioner switch, the temperature adjustment switch, and the like are electrically/signally connected to the electronic controller 21 by wiring harnesses 2042, so as to control a series of functions of the side-by-side utility vehicle 100, such as the switching of the two-wheeled drive and the four-wheeled drive, the turning on of the air conditioner, and the adjustment of the air conditioner temperature, and the like.

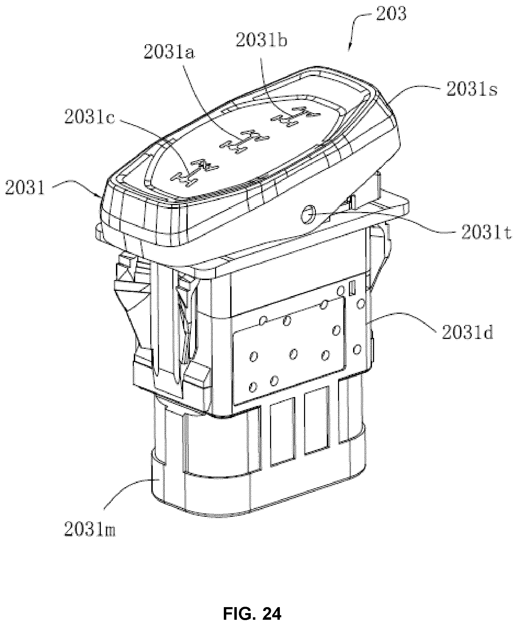

Please refer to FIGs. 24 to 27, the mode switch 2031 may include a two-wheeled drive gear 2031a, a four-wheeled drive gear 2031b, and a front-wheeled drive lock gear 2031c. The four-wheeled drive gear 2031b may be located between the two-wheeled drive gear 2031a and the front-wheeled drive lock gear 2031c. The two-wheeled drive gear 2031a enables the two-wheeled drive operation of the side-by-side utility vehicle 100. The four-wheeled drive gear 2031b enables the four-wheeled drive operation of the side-by-side utility vehicle 100. The front-wheeled wheel lock gear 2031c enables the front wheel locking of the side-by-side utility vehicle 100. The mode switch 2031 may include a housing 2031d, a pushing plate 2031x, a switch shaft 2031t, and a gear lever assembly 2031u. The housing 2031d may include a cavity 2031za, a first gear slot 2031e, a second gear slot 2031f, and a third gear slot 2031j. The first gear slot 2031e, the second gear slot 2031f, and the third gear slot 2031j may be all located in the cavity 2031za. The second gear slot 2031f may be located between the first gear slot 2031e and the third gear slot 2031j. The pushing plate 2031x may be rotatably connected to the housing 2031d by the switch shaft 2031t. One end of the gear lever assembly 2031u may be connected to the pressing plate 2031x, and the other end of the gear lever assembly 2031u may be able of swinging with the pressing plate 2031x and switching between the first gear slot 2031e, the second gear slot 2031f, and the third gear slot 2031j, so as to realize the mutual switching between the two-wheeled drive gear 2031a, the four-wheeled drive gear 2031b, and the front drive lock gear 2031c.

Please refer to FIG. 25, the gear lever assembly 2031u may include a switch lever 2031v, an elastic member 2031x and a ball 2031y. One end of the switch lever 2031v may be connected to the pressing plate 2031x, and the switch lever 2031v may be able of swinging in the housing 2031d driven by the pressing plate 2031x. A fourth mounting hole 2031w may be formed in one end of the switch lever 2031v away from the pressing plate 2031x. The elastic member 2031x may be mounted within the fourth mounting hole 2031w. A part of the ball 2031y may be located in the fourth mounting hole 2031w and may abut against the elastic member 2031x. The other end of the switch lever 2031v may be able of swinging and falling into the first gear slot 2031e, the second gear slot 2031f, or the third gear slot 2031j.

Please refer to FIGs. 26 and 27, the first gear slot 2031e, the second gear slot 2031f, and the third gear slot 2031j may be arc-shaped, and the first gear slot 2031e, the second gear slot 2031f, and the third gear slot 2031j may be sequentially connected. The second gear slot 2031f may include a first connection end connected to the first gear slot 2031e, and the first gear slot 2031e may include a second connection end connected to the first connection end. The first connection end intersects with the second connection end, creating a first intersection point P and a first angle β1. The second gear slot 2031f may include a third connection end connected to the third gear slot 2031j, and the third gear slot 2031j may include a fourth connection end connected to the third connection end. The third connection end intersects with the fourth connection end, creating a second intersection point Q and a second angle β2. The difference between β1 and β2 may be in the range from 5° to 30°. That is to say, the slope of the second gear slot 2031f near the third gear slot 2031j may be larger than the slope of the second gear slot 2031f near the first gear slot 2031e. The transition between the first gear slot 2031e and the second gear slot 2031f is smoother than the transition between the second gear slot 2031f and the third gear slot 2031j. In this way, when switching gears, the damping of switching lever 2031v from second gear slot 2031f to third gear slot 2031j may be larger than the damping of switching lever 2031v from first gear slot 2031e to second gear slot 2031f. That is to say, the force values required for switching each gear may be different. The force value required becomes larger when the four-wheeled drive gear is switched to the front-wheeled drive lock gear 2031c, so as to avoid the two-wheeled drive gear 2031a directly switching to the front-wheeled drive lock gear 2031c when the two-wheeled drive gear 2031a is switched to the four-wheeled lock gear 2031b, and to improve the safety.

In one embodiment, please refer to FIG. 27, the position of the second intersection point Q may be relatively higher than the position of the first intersection point P along the axis Z direction of the cavity 2031za. In this way, based on the above angle, the stroke of the four-wheeled gear 2031b to the front-wheeled drive lock gear 2031c is increased, so the damping when the switch lever 2031v is switched from the second gear slot 2031f to the third gear slot 2031j is increased, thereby avoid over-shifting during the switching process.

Please refer to FIGs. 26 and 27, the second gear slot 2031f may include a second arc-shaped section 2031g, a first straight section 2031h, and a second straight section 2031i. One end of the first straight section 2031h is connected to the first gear slot 2031e, and the other end is connected to the second arc-shaped section 2031g. One end of the second straight section 2031i is connected to the third gear slot 2031j, and the other end is connected to the second arc-shaped section 2031g. The first gear slot 2031e may include at least a third straight section 2031k. The third gear slot 2031j may include at least a fourth straight section 2031z. The third straight section 2031k intersects with the first straight section 2031h, creating a first angle β1. The fourth straight section 2031z intersects with second straight section 2031i, creating a second angle β2. The first angle β1 may be in the range from 120° to 140°, and the second angle β2 may be in the range from 100° to 125°.

Further, the first straight section intersects with the plane A1, creating a third angle β3. The second straight section intersects the plane A1, creating a fourth angle β4. The difference between the fourth angle β4 and the third angle β3 may be in the range from 5° to 30°. The third angle β3 may be in the range from 45° to 60°. The fourth angle β4 may be in the range from 55° to 75°. Therefore, the slope of the second straight section 2031i with respect to the plane A1 may be larger than the slope of the first straight section 2031h with respect to the plane A1. Therefore, the force value required for the switching lever 2031v to switch from the second gear slot 2031f to the third gear slot 2031j is increased.

In one embodiment, the third straight section 2031k intersects with the plane A1, creating a fifth angle β5. The fourth straight section 2031z intersects with the plane A1, creating a sixth angle β6. The value of the fifth angle β5 may be basically the same as the value of the sixth angle β6. In this way, the operating force value of switching from the two-wheeled drive gear 2031a to the four-wheeled drive gear 2031b may be basically equal to the operating force value of switching from the front-drive lock gear 2031c to the four-wheeled drive gear 2031b f, thereby improving the consistency of operation.

Please refer to FIG. 25, FIG. 28 and FIG. 29, the housing 2031d may have an output contact 2031l, and the output contact 2031l protrudes from the outer surface of the housing 2031d. The output contact 2031l may be connected to the circuit board on the corresponding switches 203, such as the circuit board 1981n in the mode switch 2031, the circuit board in the air conditioner switch, the circuit board in the temperature adjustment switch, and the like. The wiring harness 2042 may have a butt joint 2031n connected to the output contact 2031l, and the butt joint 2031n may be connected to the output contact 2031l, so that the switches 203 is electrically/signally connected to the ECU 21. A connection cover 2031m surrounding the output contact 2031l may be provided on the outer surface of the housing 2031d. The connection cover 2031m and the housing 2031d may be integrated or may be separated. The connection cover 2031m or the butt joint 2031n may be provided with a sealing member 2031q. After the butt joint 2031n and the output contact 2031l are butted, the sealing member 2031q is able of sealing the gap between the butt joint 2031n and the connection cover 2031m, so that the output contact 2031l is in a sealed state, avoiding short-circuit ablation of the output contact 2031l and the butt joint 2031n due to water and the like. At the same time, during the butting process, the connection cover 2031m also plays a guiding role, which is beneficial to the connection of the butt joint 2031n and the output contact 2031l, and the assembly is more convenient.

In one embodiment, a second receiving slot 2031o and a second slot 2031p may be formed on the butt joint 2031n, and the second receiving slot 2031o may be provided with a connection contact corresponding to the output contact 2031l. The second slot 2031p may be provided surrounding the second receiving slot 2031ο. The sealing member 2031q may be disposed within the second slot 2031p, and the connection cover 2031m may be inserted into the second slot 2031p, and may be sealedly connected to the sealing member 2031q. That is to say, the sealing is not only realized by the seal 2031q, but also by covering the butt joint 2031n on the connecting cover 2031m, thereby increasing the sealing path and improving the sealing effect. The second receiving slot 2031o may be disposed concentrically with the second slot 2031p. The sealing member 2031q may be sleeved on the outer wall of the second slot 2031p. Meanwhile, the sealing member 2031q may be a rubber sealing ring or a silicone sealing ring. An annular sealing protrusion 2031r may be provided on the outer side wall of the sealing member 2031q in the circumferential direction. The sealing protrusion 2031r may be in sealing contact with the inner wall of the connection cover 2031m. Here, the number of the sealing protrusions 2031r may be more than one, and a plurality of sealing protrusions 2031r may be provided at intervals along the axial direction of the second slot 2031p. In another embodiment, the sealing member 2031q may also be directly disposed on the inner wall of the connection cover 2031m, and the butt joint 2031n may be inserted into the connection cover 2031m and may abut against the sealing member 2031q.

Please refer to FIG. 23, the electrical components 19 may further include a battery 1922 and an electrical socket assembly 204. The battery 1922 may be mounted on the middle frame portion 1112 for storing electricity. The electrical socket assembly 204 may be connected to the battery 1922 by the wiring harness 2042 and may be mounted on the frame 111 to supply electricity to accessories of the side-by-side utility vehicle 100, thereby avoiding damage to the original wiring harness of the side-by-side utility vehicle 100 during the modification process.

Please refer to FIG. 31, the electrical socket assembly 204 may include a terminal block 2021, a plurality of harnesses 2042, a wiring terminal 2043 and a power lock 2044. The wiring terminal 2043 may be connected to the battery by the wiring harness 2042. The power lock 2044 may be connected between the terminal block 2021 and the battery 1922, and the opening/closing of the power lock 2044 may be corresponded to the opening/closing of the side-by-side utility vehicle 100. That is to say, the power lock 2044 is turned on when the side-by-side utility vehicle 100 is started or powered on. and the power lock 2044 is turned off when the side-by-side utility vehicle 100 is turned off. The terminal block 2043 may include the first type of terminal block 2043a and the second type of terminal block 2043b. The first type of terminal block 2043a may be electrically connected to the battery 1922 by the wiring harness 2042. The second type of terminal block 2043b may be electrically connected to the power lock 2044 by the wiring harness 2042. The power lock 2044 may be electrically connected to the battery 1922. In this way, the electrical connection between the second type of terminal block 2043b and the battery 1922 needs to be controlled by the power lock 2044, so that during the process of installing accessories (after-market parts) on the side-by-side utility vehicle 100, if the accessories need continuous electricity power supply, the accessories can be connected to a corresponding first type of terminal block 2043a that is not controlled by the power lock 2044. If the electricity supply of the accessories needs to be controlled by the opening/closing of the side-by-side utility vehicle 100, the accessories can be connected to a corresponding second type of terminal block 2043b that is controlled by the power lock 2044.

In some embodiments, please refer to FIGS. 31 and 33, the first type of terminal block 2043a may include a first terminal block 2043c and a second terminal block 2043d. The second type of terminal block 2043b may include a third terminal 2043e. The first terminal 2043c may be connected to the positive electrode of the battery 1922 by the wiring harness 2042, and the second terminal 2043d may be connected to the negative electrode of the battery 1922, so that a continuous electricity supply circuit is formed by the first terminal 2043c, the second terminal 2043d and the battery 1922. The power lock 2044 may be corresponded to the start switch of the side-by-side utility vehicle 100, that is to say, the power lock 2044 is turned on when the side-by-side utility vehicle 100 is started, and the power lock 2044 is turned off when the side-by-side utility vehicle 100 is turned off. One end of the power lock 2044 may be connected to the positive electrode of the battery 1922, and the other end may be connected to the third terminal block 2043e by the wiring harness 2042. The third terminal block 2043e is conducted with the positive electrode of the battery 1922 when the power lock 2044 is turned on, and the third terminal block 2043e is disconnected from the positive electrode of the battery 1922 when the power lock 2044 is turned off. In this way, a electricity supply circuit controlled by the power lock 2044 is formed by the third terminal block 2043e, the power lock 2044, the second terminal block 2043d and the battery 1922. During the process of installing accessories on the side-by-side utility vehicle 100, the accessories can be connected to the first terminal block 2043c and the second terminal block 2043d when the accessories need continuous power supply. When the electricity supply to the accessories needs to be controlled by the opening/closing of the side-by-side utility vehicle 100, the wiring harnesses of the accessories may be connected to the second terminal block 2043d and the third terminal block 2043e.

In other embodiments, please refer to FIG. 34, the first type of terminal block 2043a may include a first terminal block 2043c and a second terminal block 2043d. The second type of terminal block 2043b may include a third terminal block 2043e and a fourth terminal block 2043f. The first terminal block 2043c may be connected to the positive electrode of the battery 1922, and the second terminal block 2043d may be connected to the negative electrode of the battery 1922 to form a continuous electricity supply circuit. The third terminal block 2043e may be connected to the negative electrode of the battery 1922 by the wiring harness 2042, and the fourth terminal block 2043f may be connected to the power lock 2044 by the wiring harness 2042. The power lock 2044 may be connected to the positive electrode of the battery 1922. In this way, a electricity supply circuit controlled by the power lock 2044 is formed. Of course, the numbers of the first type of terminal block 2043a and the second type of terminal block 2043b may be three, four or other, respectively. The connection between the terminal block 2043, the power lock 2044 and the battery 1922 may be a combination of the above two embodiments, or one of the above two embodiments or others according to actual needs, and this is not limited.

Please refer to FIG. 31 and FIG. 33, the electrical socket assembly 204 may further include a plurality of fuse boxes 2045, a wiring cover 2047 and a plurality of barrier plates 2046. The fuse boxes 2045 may be provided on the corresponding wiring harness 2042 for protecting the battery 1992, so as to avoid the problem of feeding the battery 1922. The covers 2047 may be covered on the terminal block 2021 to protect the wiring terminals 2043, thereby avoiding the short circuit phenomenon of the wiring terminals 2043 caused by falling metal objects. The number of the barrier plates 2046 may be a plurality of, and the plurality of barrier plates 2046 may be arranged on connecting bases at intervals. The two adjacent wiring terminals 2043 may be isolated by one barrier plate 2046 to avoid interference of the wiring harnesses 2042 between the two adjacent wiring terminals 2043. Here, the barrier plates 2046 and the connecting bases may be integrated.

In one embodiment, the fuse boxes 2045 may include a main fuse 2045a and a plurality of sub-fuses 2045b. The main fuse 2045a may be close to the positive electrode of the battery 1922. One of the sub-fuses 2045b may be on the harness 2042 connected between the wiring terminal 2043 and the positive electrode of battery 1922. The other fuse 2045b may be on the harness 2042 connected between the wiring terminal 2043 and the power lock 2044. In this embodiment, the main fuse 2045a and the sub-fuse 2045b on the harness 2042 connected between the wiring terminal 2043 and the positive electrode of the battery 1922 may be provided in series, so as to achieve dual protection and further to avoid the feeding problem of the battery 1922.

Please refer to FIG. 31, the wiring harnesses 2042 may include a first wiring harness 2042a and a second wiring harness 2042c. One end of the first wiring harness 2042a may be connected to the terminal 2043, and the other end of the first wiring harness 2042a may be provided with a wiring male terminal 2042b. One end of the second wiring harness 2042c may be connected to the battery 1922, and the other end of the second wiring harness 2042c may be provided with a wiring female terminal 2042d. The wiring male terminal 2042b may be plugged with the wiring female terminal 2042d, so that the electrical connection between the terminal block 2021 and the battery 1922 can be realized. In this way, the terminal block 2021 and the wiring harness 2042 on the battery 1922 may be integrated, and the wiring can be very simple and convenient.

The above-mentioned embodiments only represent several embodiments of the present invention, and the descriptions thereof are specific and detailed, but should not be construed as a limitation on the scope of the disclosure patent. It should be pointed out that for those of ordinary skill in the art, without departing from the concept of the present invention, several modifications and improvements can also be made, which all belong to the protection scope of the present invention. Therefore, the protection scope of the patent of the present invention should be subject to the appended claims.

## Claims

1. A side-by-side utility vehicle comprising:
a frame comprising a front frame portion and a rear frame portion, the front frame portion being located at the front end of the side-by-side utility vehicle, and the rear frame portion being located at the rear end of the side-by-side utility vehicle;
a front wheel assembly comprising a left-front wheel and a right-front wheel;
a rear wheel assembly comprising a left-rear wheel and a right-rear wheel;
a front suspension assembly at least partially mounted on the front frame portion, the front suspension assembly comprising a first lower rocker arm, a first upper rocker arm, and a front wheel shaft support assembly disposed between the first lower rocker arm and the first upper rocker arm, the first lower rocker arm and the first upper rocker arm being mounted on the frame respectively and the first upper rocker arm being located above the first lower rocker arm along the vertical direction of the side-by-side utility vehicle; and
a rear suspension assembly at least partially mounted on the rear frame portion, the rear suspension assembly comprising a second lower rocker arm, a second upper rocker arm, a rear shock absorber assembly, and a rear wheel shaft support assembly disposed between the second lower rocker arm and the second upper rocker arm, the second lower rocker arm and the second upper rocker arm are mounted on the rear frame portion, respectively;
wherein the front suspension assembly further comprises a front torsion bar assembly rotatably mounted on the front frame portion, the front torsion bar assembly being at least partially located above the first upper rocker arm along the vertical direction of the side-by-side utility vehicle, and being movably connected to the first upper rocker arm;
the rear suspension assembly further comprises a control arm positioned between the second lower rocker arm and the second upper rocker arm along the vertical direction, one end of the control arm being rotatably connected to the rear wheel shaft support assembly, and the other end of the control arm being rotatably connected to the rear frame portion; and
a rear torsion bar assembly positioned between the second lower rocker arm and the second upper rocker arm, the rear torsion bar assembly comprising a rear torsion bar and a rear mounting seat, the rear mounting seat being fixed on the rear frame portion; and the rear torsion bar being located on the inner side of the rear frame portion and is rotatably mounted on the rear mounting seat, and both ends of the rear torsion bar being movably connected to the second upper rocker arm.

2. The side-by-side utility vehicle of claim 1, wherein the front torsion bar assembly comprises:
a front mounting seat fixed on the front frame portion;
a front torsion bar rotatably mounted on the front mounting seat; and
two front connecting rods disposed at both ends of the front torsion bar, respectively, one end of each front connecting rod being movably connected to the front torsion bar, and the other end of each front connecting rod being movably connected to the first upper rocker arm;
wherein the front torsion bar is located above the first upper rocker arm along the vertical direction.

3. The side-by-side utility vehicle of claim 2, wherein the front torsion bar is placed inside the front frame portion.

4. The side-by-side utility vehicle of claim 2, wherein the front torsion bar assembly further comprises a front support for mounting the front mounting seat, one end of the front support is mounted on the first upper rocker arm, and the other end of the front support is connected to the front frame portion.

5. The side-by-side utility vehicle of claim 4, wherein the front support comprises
a front supporting plate for mounting the front mounting seat;
a first extending wall arranged at a first end of the front supporting plate and connected to the first upper rocker arm; and
a second extending wall arranged on a second end of the front support opposite to the first end and connected to the front frame portion.

6. The side-by-side utility vehicle of claim 5, wherein a angle defined by the second extending wall and the front supporting plate is in the range from 30° to 50°.

7. . The side-by-side utility vehicle of claim 1, wherein the first lower rocker arm comprises a first left-lower rocker arm and a first right-lower rocker arm, and the front wheel shaft support assembly comprises a left-front wheel shaft support and a right-front wheel shaft support; one end of the first left-lower rocker arm is rotatably connected to the left-front wheel shaft support, and the other end of the first left-lower rocker arm is rotatably mounted on the front frame portion; the first left-lower rocker arm and the first right-lower rocker arm are respectively arranged on two sides of the front frame portion, and one end of the first right-lower rocker arm is connected to the right-front wheel shaft support, and the other end of the first right-lower rocker arm is rotatably mounted on the front frame portion.

8. The side-by-side utility vehicle of claim 7, wherein the first left-lower rocker arm comprises a first rocker, a second rocker and a first connecting base mounted on the left-front wheel shaft support, one end of the first rocker is mounted on the first connecting base, the other end of the first rocker is rotatably connected to the front frame portion; one end of the second rocker is connected to the first connecting base, the other end of the second rocker is rotatably connected to the front frame portion, and an angle is defined by the second rocker and the first rocker; wherein the first rocker and the second rocker are both arc-shaped and are respectively arched upward.

9. The side-by-side utility vehicle of claim 7, wherein the first upper rocker arm comprises a first left-upper rocker arm and a first right-upper rocker arm, the first left-upper rocker arm and the first left-lower rocker arm are on the same side, one end of the first left-upper rocker arm is rotatably connected to the left-front wheel shaft support, and the other end of the first left-upper rocker arm is rotatably connected to the front frame portion; the first right-upper rocker arm and the first left-upper rocker arm are arranged on both sides of the front frame portion, respectively, and one end of the first right-upper rocker arm is rotatably connected to the right-front wheel shaft support, and the other end of the first right-upper rocker arm is rotatably connected to the front frame portion.

10. The side-by-side utility vehicle of claim 9, wherein the first left-upper rocker arm comprises a third rocker, a fourth rocker, a second connecting base mounted on the left-front wheel shaft support, and a second connecting rod, one end of the third rocker is mounted on the second connecting base, the other end of the third rocker is rotatably connected to the front frame portion, one end of the fourth rocker is rotatably connected to the second connecting base, and one end of the fourth rocker is rotatably connected to the front frame portion, and an angle is defined by the fourth rocker and the third rocker, wherein the third rocker and the fourth rocker are both arc-shaped and are respectively arched upward.

11. . The side-by-side utility vehicle of claim 1, further comprises a rear shock absorber assembly, one end of the rear shock absorber assembly is mounted on the second lower rocker arm, and the other end of the rear shock absorber assembly extends upward and is connected to the rear frame portion.

12. The side-by-side utility vehicle of claim 11, wherein the second lower rocker arm comprises a second left-lower rocker arm and a second right-lower rocker arm;
the second upper rocker arm comprises a second left-upper rocker arm and a second right-upper rocker arm;
the rear wheel shaft support assembly comprises a left-rear wheel shaft support and a right-rear wheel shaft support;
one end of the second left-lower rocker arm is rotatably connected to the left-rear wheel shaft support, and the other end of the second left-lower rocker arm is rotatably mounted on the rear frame portion, one end of the second right-lower rocker arm is rotatably connected to the right-rear wheel shaft support, and the other end of the second right-lower rocker arm is rotatably mounted on the rear frame portion.

13. The side-by-side utility vehicle of claim 12, further comprises two control arm assemblies, one of control arm assembles is located between the second left-lower rocker arm and the second left-upper rocker along the vertical direction, and the two ends of the control arm assembly are rotatably connected to the rear frame portion and the left-rear wheel shaft support, respectively; the other one control arm assembly is located between the second right-lower rocker arm and the second right-upper rocker arm along a vertical direction, and the two ends of the control arm assembly are rotatably connected to the rear frame portion and the right-rear wheel shaft support, respectively.

14. The side-by-side utility vehicle of claim 1 or 13, wherein the control arm assembly comprises a control arm and two rotating bases, and the two rotating bases are respectively mounted on the rear frame portion and the rear wheel shaft supports; the control arm is rotatably connected to the rotating bases; and the control arm is a rigid arm.

15. The side-by-side utility vehicle of claim 1, wherein the control arm assembly is placed outside the rear frame portion.

16. The side-by-side utility vehicle of claim 12, wherein the torsion bar assembly further comprises two rear connecting rods respectively arranged at both ends of the rear torsion bar, one end of one of the two rear connecting rods is movably connected to one end of the rear torsion bar, and the other end of the rear connecting rod is connected to the second left-upper rocker arm; one end of the other one rear connecting rod is movably connected to the other end of the rear torsion bar, and the other end of the rear connecting rod is connected to the second right-upper rocker arm; and the rear connecting rod is rotatably connected to the second left-upper rocker arm and the second right-upper rocker arm respectively by joint bearings or ball pins.

17. The side-by-side utility vehicle of claim 12, wherein an avoidance space is formed on the second right-upper rocker arm and the second left-upper rocker arm; the rear shock absorber assembly comprises a left-rear shock absorber and a right-rear shock absorber, one end of the left-rear shock absorber is connected to the second left-lower rocker arm, and the other end extends upward through the corresponding avoidance space; one end of the right-rear shock absorber is connected to the second right-lower rocker arm, and the other end extends upward through the corresponding avoidance space.

18. The side-by-side utility vehicle of claim 17, wherein the connection between the left-rear shock absorber and the second left-lower rocker arm is a point M, the connection between the second left-lower rocker arm and the left-rear wheel shaft support is a point F, and the connection between the second left-upper rocker arm and the left-rear wheel shaft support is a point N; wherein the point F and the point N do not coincide along the vertical direction of the side-by-side utility vehicle;
the point M and the point F do not coincide along the front-rear direction of the side-by-side utility vehicle; a straight line is defined by connecting the point N and the center point of the left-rear wheel shaft support, the distance from the point M to the straight line is in the range from 20 mm to 40 mm.

19. The side-by-side utility vehicle of claim 12, wherein the second left-lower rocker arm comprises a fifth rocker, a sixth rocker and a third connecting base mounted on the left-rear wheel shaft support;
one end of the fifth rocker is mounted on the third connecting base, and the other end of the fifth rocker is rotatably connected to the rear frame portion;
one end of the sixth rocker is connected to the third connecting base, and the other end is rotatably connected to the rear frame portion, an angle is defined by the fifth rocker and the sixth rocker;
the second left-lower rocker arm further comprises
a third connecting rod arranged between the fifth rocker and the sixth rocker, the two ends of the third connecting rod being fixedly connected to the fifth rocker and the sixth rocker, respectively; and
a shock absorbing plate arranged on the fifth rocker, the sixth rocker or the connecting rod, and one end of the rear shock absorber assembly being hinged on the shock absorbing plate.

20. The side-by-side utility vehicle of claim 12, wherein the second left-upper rocker arm comprises a seventh rocker, an eighth rocker, and a fourth connecting base;
the fourth connecting base is movably mounted on the left-rear wheel shaft support;
one end of the seventh rocker is connected to the fourth connecting base, and the other end of the seventh rocker is rotatably connected to the rear frame portion;
one end of the eighth rocker is connected to the fourth connecting base, and the other end of the eighth rocker is rotatably connected to the rear frame portion, an angle is defined by the eighth rocker and the seventh rocker.

21. The side-by-side utility vehicle of claim 20, wherein the fourth connecting base comprises a support arm part and a connecting part, one end of the support arm part is rotatably connected to the left-rear wheel shaft support, and the other end of the support arm part is connected to the connecting part, at least portion of the outer surface of the connecting part is a curved surface, the first rocker and/or the second rocker are welded on the curved surface, and the curved surface is a spherical surface.

22. The side-by-side utility vehicle of claim 12, wherein the rear suspension assembly further comprises an adjustment assembly arranged between the rear wheel shaft support assembly and the second upper rocker arm/the second lower rocker arm, the adjustment assembly is used for adjusting the camber angle of the rear wheel shaft support assembly.

23. The side-by-side utility vehicle of claim 22, wherein the rear suspension assembly comprises two adjustment assemblies, one of the adjustment assemblies is arranged between the second left-upper rocker arm and the left-rear wheel shaft support to adjust the camber angle of the left-rear wheel shaft support, the other adjustment assembly is arranged between the second right-upper rocker arm and the right-rear wheel shaft support to adjust the camber angle of the right-rear wheel shaft support.

24. The side-by-side utility vehicle of claim 23, wherein each adjustment assembly comprises:
a first seat body rotatably connected to the left-rear wheel shaft support or the right-rear wheel shaft support;
a second seat body connected to the second left-upper rocker arm or the second right-upper rocker arm;
an adjustment piece arranged between the first seat body and the second seat body for adjusting the gap between the first seat body and the second seat body; and
a fastener for locking the adjusted first seat body and the adjusted second seat body.

25. The side-by-side utility vehicle of claim 24, wherein the adjustment piece is C-shaped or U-shaped.

26. The side-by-side utility vehicle of claim 24, wherein the adjustable range of the gap between the first seat body and the second seat body is less than or equal to 5 cm.

27. The side-by-side utility vehicle of claim 24, wherein the fastener comprises a bolt, the bolt passes through the first seat body to the second seat body and is connected to a nut, and the adjustment piece is sleeved on the bolt.

28. The side-by-side utility vehicle of claim 24, wherein an arc-shaped slot is formed on the second seat body; the second left-upper rocker arm comprises a connecting pipe, a seventh rocker and an eighth rocker, the seventh rocker and the eighth rocker are welded to the connecting pipe, respectively; a portion of the connecting pipe is embedded in the arc-shaped slot and welded to the second seat body.

29. The side-by-side utility vehicle of claim 24, wherein the first seat body and the second seat body are both hollow, and one end of the fastener passes from the interior of the second seat body to the interior of the first seat body, and the end of the fastener is fixed inside the first seat body.

30. The side-by-side utility vehicle of claim 1, wherein
the side-by-side utility vehicle further comprises a mode switch, the mode switch comprises a two-wheeled drive gear, a four-wheeled drive gear and a front-wheeled drive lock gear, and the four-wheeled gear is located between the two-wheeled drive gear and the front-wheeled drive lock gear;
the mode switch further comprises
a housing comprising a cavity, a first gear slot, a second gear slot and a third gear slot being disposed in the cavity, the second gear slot being located between the first gear slot and the third gear slot, all of the first gear slot, the second gear slot and the third gear slot being arc-shaped slots;
a pressing plate rotatably connected to the housing; and
a gear lever assembly, one end of the gear lever assembly being connected to the pressing plate, and the other end being located in the cavity, and being capable of swinging along with the pressing plate and switching among the first gear slot, the second gear slot and the third gear slot;
the second gear slot comprises a first connection end connected to the first gear slot, and the first gear slot comprises a second connection end connected to the first connection end, the first connection end and the second connection end are intersected and define a first intersection point P and a first angle β₁;
the second gear slot further comprises a third connection end connected to the third gear slot, the third gear slot comprises a fourth connection end connected to the third connection end, the third connection end and the fourth connection end are intersected and define a second intersection point Q and a second angle β₂; the difference between the first angle β₁ and the second angle β₂ is in the range from 5° to 30°.

31. The side-by-side utility vehicle of claim 30, wherein the position of the second intersection point Q is relatively higher than the position of the first intersection point P along the axial direction of the cavity.

32. The side-by-side utility vehicle of claim 30, wherein the second gear slot comprises a first arc-shaped segment, a first straight segment, and a second straight segment, one end of the first straight segment is connected to the first gear slot, and the other end of the first straight segment is connected to the first arc-shaped segment; one end of the second straight segment is connected to the third gear slot, and the other end of the second straight segment is connected to the first arc-shaped segment;
the first gear slot comprises at least a third straight segment, the third gear slot comprises at least a fourth straight segment, and the third straight segment intersects with the first straight segment and cooperatively define a first angle β₁, the fourth straight segment intersects the second straight segment and cooperatively define a second angle β₂.

33. The side-by-side utility vehicle of claim 32, wherein the first angle β₁ is in the range from 120° to 140°, and the second angle β₂ is in the range from 100° to 125°.

34. The side-by-side utility vehicle of claim 32, wherein
the bottom surface of the cavity is set as a plane A₁, the first straight segment intersects with the plane A₁ and define a third angle β₃, and the second straight segment intersects with the plane A₁ creating a fourth angle β₄, the difference between the fourth angle β₄ and the third angle β₃ is in the range from 5° to 30°.

35. The side-by-side utility vehicle of claim 34, wherein the third angle β₃ is in the range from 45° to 60°, and the fourth angle β₄ is in the range from 55° to 75°.

36. The side-by-side utility vehicle of claim 34, wherein the third straight segment intersects with the plane A₁ creating a fifth angle β₅; the fourth straight segment intersects with the plane A₁ creating a fifth angle β₆, and the fifth angle β₅ is basically the same as the sixth angle β₆.

37. The side-by-side utility vehicle of claim 1, wherein
the frame further comprises a middle frame portion, the middle frame portion is arranged between the front frame portion and the rear frame portion, an accommodating space is formed by the middle frame portion, the front frame portion and the rear frame portion;
the middle frame portion comprises
a first type of beams comprising at least a first cross beam and a second cross beam, the first cross beam and the second cross beam being at least partially located on the same plane S; and
a second type of beams respectively connected to the first type of beams and comprising at least a first longitudinal beam;
the first longitudinal beam comprising a first rod and a second rod, one end of the first rod being connected to the first cross beam, and the other end of the first rod extending upward and toward the second cross beam; one end of the second rod being connected to the second cross beam, and the other end of the second rod extending upward toward the first cross beam and being connected to the first rod;
wherein the angle between the first rod and the plane S is A1, and A1 is set to be in the range from 5° to 15°; and the angle between the second rod and the plane S is A₂, and A₂ is set to be in the range from 5° to 15°.

38. The side-by-side utility vehicle of claim 37, wherein the angle A1 is greater than the angle A2.

39. The all-terrain vehicle of claim 1, further comprises
an electric socket unit mounted on the frame, the electric socket unit comprising a terminal block, a plurality of harnesses and a plurality of wiring terminals, and the wiring terminals comprising a first type of wiring terminals and a second type of wiring terminals; and
a battery electrically connected to the electric socket unit;
wherein the electrical socket unit further comprises
a power lock connected between the terminal block and the battery, and the opening/closing of the power lock is corresponded to the opening/closing of the all-terrain vehicle;
wherein the first type of wiring terminals is electrically connected to the battery by the harnesses, and the second type of wiring terminals are electrically connected to the power lock by the harnesses and the power lock is electrically connected to the battery.

40. The all-terrain vehicle of claim 39, wherein
the first type of wiring terminals comprise a first wiring terminal and a second wiring terminal, and the second type of wiring terminals comprise a third wiring terminal;
the first wiring terminal is connected to the positive electrode of the battery by the harnesses;
the second wiring terminal is connected to the negative electrode of the battery by the harnesses; and
the third wiring terminal is connected to the power lock by the harnesses.

41. The all-terrain vehicle of claim 39, wherein
the first type of wiring terminals comprises a first wiring terminal and a second wiring terminal, the second type of wiring terminals comprise a third wiring terminal and a fourth wiring terminal, wherein the first wiring terminal is connected to the positive electrode of the battery and the second wiring terminal is connected to the negative electrode of the battery to form a continuous circuit;
the third wiring terminal is connected to the negative electrode of the battery by the harnesses, and the fourth wiring terminal is connected to the power lock by the harnesses, and the power lock is connected to the positive electrode of the battery.

42. An all-terrain vehicle comprising:
a frame comprising a front frame portion and a rear frame portion, the front frame portion being located at the front end of the all-terrain vehicle, and the rear frame portion being located at the rear end of the all-terrain vehicle;
a front wheel set comprising a left-front wheel and a right-front wheel;
a rear wheel set comprising a left-rear wheel and a right-rear wheel;
a front suspension assembly mounted on the front frame portion, the front suspension assembly comprising a first lower rocker arm unit, a first upper rocker arm unit, and a front wheel shaft support unit mounted between the first lower rocker arm unit and the first upper rocker arm unit, the first lower rocker arm unit and the first upper rocker arm unit being mounted on the frame respectively and the first upper rocker arm unit being located above the first lower rocker arm unit along the vertical direction of the all-terrain vehicle;
a rear suspension assembly at least partially mounted on the rear frame portion, the rear suspension assembly comprising a second lower rocker arm unit, a second upper rocker arm unit, a rear shock absorber unit, and a rear wheel shaft support unit disposed between the second lower rocker arm unit and the second upper rocker arm unit, the second lower rocker arm unit and the second upper rocker arm unit are mounted on the rear frame portion, respectively;
wherein the front suspension assembly further comprises
a front torsion bar unit rotatably mounted on the front frame portion, the front torsion bar unit being located above the first upper rocker arm unit along the vertical direction of the all-terrain vehicle, and being movably connected to the first upper rocker arm unit;
a rear torsion bar unit is located between the second lower rocker arm unit and the second upper rocker arm unit, the rear torsion bar unit comprises a rear torsion bar and a rear mounting seat, the rear mounting seat is fixed on the rear frame portion; and the rear torsion bar is located on the inner side of the rear frame portion and is rotatably mounted on the rear mounting seat, and both ends of the rear torsion bar are movably connected to the second upper rocker arm unit.

43. The all-terrain vehicle of claim 42, wherein the front torsion bar unit comprises:
a front mounting seat fixed on the front frame portion;
a front torsion bar rotatably mounted on the front mounting seat; and
two front connecting rods disposed at both ends of the front torsion bar, respectively, one end of each front connecting rod being movably connected to the front torsion bar, and the other end of each front connecting rod being movably connected to the first upper rocker arm unit;
wherein the front torsion bar is located above the first upper rocker arm unit along the vertical direction.

44. The all-terrain vehicle of claim 43, wherein the front torsion bar is placed inside the front frame portion.

45. The all-terrain vehicle of claim 43, wherein the front torsion bar unit further comprises a front support for mounting the front mounting seat, one end of the front support is mounted on the first upper rocker arm unit, and the other end of the front support is connected to the front frame portion.

46. The all-terrain vehicle of claim 45, wherein the front support comprises
a front supporting plate for mounting the front mounting seat;
a first flange arranged at one end of the front supporting plate and connected to the first upper rocker arm unit; and
a second flange arranged on the other end of the front support and connected to the front frame portion.

47. The all-terrain vehicle of claim 46, wherein the included angle between the second flange and the front supporting plate is set to be in the range from 30° to 50°.

48. The all-terrain vehicle of claim 42, wherein the first lower rocker arm unit comprises a first left-lower rocker arm and a first right-lower rocker arm, and the front wheel shaft support unit comprises a left-front wheel shaft support and a right-front wheel shaft support; one end of the first left-lower rocker arm is rotatably connected to the left-front wheel shaft support, and the other end of the first left-lower rocker arm is rotatably mounted on the front frame portion; the first left-lower rocker arm and the first right-lower rocker arm are arranged on both sides of the front frame portion, and one end of the first right-lower rocker arm is connected to the right-front wheel shaft support, and the other end of the first right-lower rocker arm is rotatably mounted on the front frame portion.

49. The all-terrain vehicle of claim 48, wherein the first left-lower rocker arm comprises a first rocker, a second rocker and a first connecting base, the first connecting base is mounted on the left-front wheel shaft support, one end of the first rocker is mounted on the first connecting base, the other end of the first rocker is rotatably connected to the front frame portion; one end of the second rocker is connected to the first connecting base, the other end of the second rocker is rotatably connected to the front frame portion, and the second rocker and the first rocker are arranged at an angle; wherein the first rocker and the second rocker are both arc-shaped and are respectively arched upward.

50. The all-terrain vehicle of claim 48, wherein the first left-upper rocker arm unit comprises a first left-upper rocker arm and a first right-upper rocker arm, the first left-upper rocker arm and the first left-lower rocker arm are on the same side, one end of the first left-upper rocker arm is rotatably connected to the left-front wheel shaft support, and the other end of the first left-upper rocker arm is rotatably connected to the front frame portion; the first right-upper rocker arm and the first left-upper rocker arm are arranged on both sides of the front frame portion, respectively, and one end of the first right-upper rocker arm is rotatably connected to the right-front wheel shaft support, and the other end of the first right-upper rocker arm is rotatably connected to the front frame portion.

51. The all-terrain vehicle of claim 50, wherein the first left-upper rocker arm comprises a third rocker, a fourth rocker, a second connecting base mounted on the left-front wheel shaft support, and a second connecting rod, one end of the third rocker is mounted on the second connecting base, the other end of the third rocker is rotatably connected to the front frame portion, one end of the fourth rocker is rotatably connected to the second connecting base, and one end of the fourth rocker is rotatably connected to the front frame portion, and the fourth rocker and the third rocker are arranged at an angle; wherein the third rocker and the fourth rocker are both arc-shaped and are respectively arched upward.

52. The all-terrain vehicle of claim 42, wherein
the all-terrain vehicle further comprises a mode switch, the mode switch comprises a two-wheeled drive gear, a four-wheeled drive gear and a front-wheeled drive lock gear, and the four-wheeled gear is located between the two-wheeled drive gear and the front-wheeled drive lock gear;
the mode switch further comprises
a housing comprising a cavity, a first gear slot, a second gear slot and a third gear slot being disposed in the cavity, the second gear slot being located between the first gear slot and the third gear slot, all of the first gear slot, the second gear slot and the third gear slot being arc-shaped slots;
a pressing plate rotatably connected to the housing; and
a gear lever unit, one end of the gear lever unit being connected to the pressing plate, and the other end being located in the cavity, and being capable of swinging along with the pressing plate and switching among the first gear slot, the second gear slot and the third gear slot;
the second gear slot comprises a first connection end connected to the first gear slot, and the first gear slot comprises a second connection end connected to the first connection end, the first connection end intersects with the second connection end creating a first intersection point P and a first included angle β₁;
the second gear slot further comprises a third connection end connected to the third gear slot, the third gear slot comprises a fourth connection end connected to the third connection end, the third connection end intersects with the fourth connection end creating a second intersection point Q and a second included angle β₂; the difference between the first angle β₁ and the second angle β₂ is in the range from 5° to 30°.

53. The all-terrain vehicle of claim 52, wherein the position of the second intersection point Q is relatively higher than the position of the first intersection point P along the axial direction of the cavity.

54. The all-terrain vehicle of claim 52, wherein the second gear slot comprises a first arc-shaped segment, a first straight segment, and a second straight segment, one end of the first straight segment is connected to the first gear slot, and the other end of the first straight segment is connected to the first arc-shaped segment; one end of the second straight segment is connected to the third gear slot, and the other end of the second straight segment is connected to the first arc-shaped segment; the first gear slot comprises at least a third straight segment, the third gear slot comprises at least a fourth straight segment, and the third straight segment intersects with the first straight segment creating a first included angle β₁, the fourth straight segment intersects the first straight segment creating a second included angle β₂.

55. The all-terrain vehicle of claim 54, wherein the first included angle β₁ is in the range from 120° to 140°, and the second included angle β₂ is in the range from 100° to 125°.

56. The all-terrain vehicle of claim 54, wherein the bottom surface of the cavity is set as a plane A₁, the first straight segment intersects with the plane A₁ creating a third included angle β₃, and the second straight segment intersects with the plane A₁ creating a fourth included angle β₄, the difference between the fourth angle β₄ and the third angle β₃ is in the range from 5° to 30°.

57. The all-terrain vehicle of claim 56, wherein the third included angle β₃ is in the range from 45° to 60°, and the fourth included angle β₄ is in the range from 55° to 75°.

58. The all-terrain vehicle of claim 56, wherein the third straight segment intersects with the plane A₁ creating a fifth included angle β₅; the fourth straight segment intersects with the plane A₁ creating a fifth angle β₆, and the fifth included angle β₅ is basically the same as the sixth included angle β₆.

59. The all-terrain vehicle of claim 42, wherein
the frame further comprises a middle frame portion, the middle frame portion is arranged between the front frame portion and the rear frame portion, an accommodating space is formed by the middle frame portion, the front frame portion and the rear frame portion;
the middle frame portion comprises
a first type of beams comprising at least a first cross beam and a second cross beam, the first cross beam and the second cross beam being at least partially located on the same plane S; and
a second type of beams respectively connected to the first type of beams and comprising at least a first longitudinal beam;
the first longitudinal beam comprising a first rod and a second rod, one end of the first rod being connected to the first cross beam, and the other end of the first rod extending upward and toward the second cross beam; one end of the second rod being connected to the second cross beam, and the other end of the second rod extending upward toward the first cross beam and being connected to the first rod;
wherein the included angle between the first rod and the plane S is A1, and A1 is set to be in the range from 5° to 15°; and the included angle between the second rod and the plane S is A₂, and A₂ is set to be in the range from 5° to 15°.

60. The all-terrain vehicle of claim 59, wherein the included angle A1 is greater than the included angle A2.

61. The all-terrain vehicle of claim 42, further comprises
an electric socket unit mounted on the frame, the electric socket unit comprising a terminal block, a plurality of harnesses and a plurality of wiring terminals, and the wiring terminals comprising a first type of wiring terminals and a second type of wiring terminals; and
a battery electrically connected to the electric socket unit;
wherein the electrical socket unit further comprises
a power lock connected between the terminal block and the battery, and the opening/closing of the power lock is corresponded to the opening/closing of the all-terrain vehicle;
wherein the first type of wiring terminals are electrically connected to the battery by the harnesses, and the second type of wiring terminals are electrically connected to the power lock by the harnesses and the power lock is electrically connected to the battery.

62. The all-terrain vehicle of claim 61, wherein the first type of wiring terminals comprises a first wiring terminal and a second wiring terminal, and the second type of wiring terminals comprise a third wiring terminal; the first wiring terminal is connected to the positive electrode of the battery by the harnesses; the second wiring terminal is connected to the negative electrode of the battery by the harnesses; and the third wiring terminal is connected to the power lock by the harnesses.

63. The all-terrain vehicle of claim 61, wherein the first type of wiring terminals comprises a first wiring terminal and a second wiring terminal, the second type of wiring terminals comprise a third wiring terminal and a fourth wiring terminal, wherein the first wiring terminal is connected to the positive electrode of the battery and the second wiring terminal is connected to the negative electrode of the battery to form a continuous circuit; the third wiring terminal is connected to the negative electrode of the battery by the harnesses, and the fourth wiring terminal is connected to the power lock by the harnesses, and the power lock is connected to the positive electrode of the battery.

64. An all-terrain vehicle comprising:
a frame comprising a front frame portion and a rear frame portion, the front frame portion being located at the front end of the all-terrain vehicle, and the rear frame portion being located at the rear end of the all-terrain vehicle; wherein the rear frame portion comprises an inner side toward the front frame portion and an outer side away from the front frame portion;
a front wheel set comprising a left-front wheel and a right-front wheel;
a rear wheel set comprising a left-rear wheel and a right-rear wheel; a rear suspension assembly mounted on the rear frame portion, the rear suspension assembly comprising a lower rocker arm unit, a upper rocker arm unit, and a rear wheel shaft support unit mounted on the lower rocker arm unit and the upper rocker arm unit, the lower rocker arm unit and the upper rocker arm unit are mounted on the rear frame portion, respectively;
wherein the rear suspension assembly further comprises a rear torsion bar unit located between the lower rocker arm unit and the upper rocker arm unit, the rear torsion bar unit comprises a rear torsion bar and a rear mounting seat, the rear mounting seat being fixed on the rear frame portion; and the rear torsion bar is located on the inner side of the rear frame portion and is rotatably mounted on the rear mounting seat, and both ends of the rear torsion bar are movably connected to the upper rocker arm unit.

65. The all-terrain vehicle of claim 64, wherein the lower rocker arm unit comprises a left-lower rocker arm and a right-lower rocker arm; the upper rocker arm unit comprises a left-upper rocker arm and a right-upper rocker arm; the rear torsion bar further comprises two rear connecting rods respectively arranged at both ends of the rear torsion bar, one end of one of the rear connecting rods is movably connected to the rear torsion bar, and the other end of the rear connecting rod is movably connected to the left-upper rocker arm; one end of the other one rear connecting rod is movably connected to the rear torsion bar, and the other end of the rear connecting rod is movably connected to the right-upper rocker arm.

66. The all-terrain vehicle of claim 65, wherein the left-lower rocker arm comprises a fifth rocker, a sixth rocker and a third connecting base mounted on the left-rear wheel shaft support; one end of the fifth rocker is mounted on the third connecting base, and the other end of the fifth rocker is rotatably connected to the rear frame portion; one end of the sixth rocker is connected to the third connecting base, and the other end of the sixth rocker is rotatably connected to the rear frame portion, the sixth rocker and the fifth rocker are arranged at an angle.

67. The all-terrain vehicle of claim 66, the left-lower rocker arm further comprises a third connecting rod arranged between the fifth rocker and the sixth rocker, and the two ends of the third connecting rod being fixedly connected to the fifth rocker and the sixth rocker, respectively.

68. The all-terrain vehicle of claim 66, wherein the left-lower rocker arm further comprises a shock absorbing plate, the all-terrain vehicle further comprises a rear shock absorber unit; wherein the shock absorbing plate arranged on the fifth rocker, the sixth rocker or the connecting rod, and one end of the rear shock absorber unit is hinged on the shock absorbing plate.

69. The all-terrain vehicle of claim 65, wherein the rear connecting rod is connected to the left-upper rocker arm and the right-upper rocker arm by joint bearings or ball pins.

70. The all-terrain vehicle of claim 65, wherein the rear wheel shaft support unit comprises a left-rear wheel shaft support and a right-rear wheel shaft support; the left-upper rocker arm comprises a seventh rocker, an eighth rocker and a fourth connecting base; the fourth connecting base is movably mounted on the left-rear wheel shaft support; one end of the seventh rocker is connected to the fourth connecting base, and the other end of the seventh rocker is rotatably connected to the rear frame portion; one end of the eighth rocker is connected to the fourth connecting base, and the other end of the eighth rocker is rotatably connected to the rear frame portion, the eighth rocker and the seventh rocker are arranged at an angle.

71. The all-terrain vehicle of claim 70, wherein the fourth connecting base comprises a support arm part and a connecting part, one end of the support arm part is rotatably connected to the left-rear wheel shaft support, and the other end of the support arm part is connected to the connecting part, at least portion of the outer surface of the connecting part is a curved surface, the seventh rocker and/or the eighth rocker are welded on the curved surface, and the curved surface is a spherical surface.

72. The all-terrain vehicle of claim 64, wherein
the all-terrain vehicle further comprises a mode switch, the mode switch comprises a two-wheeled drive gear, a four-wheeled drive gear and a front-wheeled drive lock gear, and the four-wheeled gear is located between the two-wheeled drive gear and the front-wheeled drive lock gear;
the mode switch further comprises
a housing comprising a cavity, a first gear slot, a second gear slot and a third gear slot being disposed in the cavity, the second gear slot being located between the first gear slot and the third gear slot, all of the first gear slot, the second gear slot and the third gear slot being arc-shaped slots;
a pressing plate rotatably connected to the housing; and
a gear lever unit, one end of the gear lever unit being connected to the pressing plate, and the other end being located in the cavity, and being capable of swinging along with the pressing plate and switching among the first gear slot, the second gear slot and the third gear slot;
the second gear slot comprises a first connection end connected to the first gear slot, and the first gear slot comprises a second connection end connected to the first connection end, the first connection end intersects with the second connection end creating a first intersection point P and a first included angle β₁;
the second gear slot further comprises a third connection end connected to the third gear slot, the third gear slot comprises a fourth connection end connected to the third connection end, the third connection end intersects with the fourth connection end creating a second intersection point Q and a second included angle β₂; the difference between the first angle β₁ and the second angle β₂ is in the range from 5° to 30°.

73. The all-terrain vehicle of claim 71, wherein the position of the second intersection point Q is relatively higher than the position of the first intersection point P along the axial direction of the cavity.

74. The all-terrain vehicle of claim 72, wherein the second gear slot comprises a first arc-shaped segment, a first straight segment, and a second straight segment, one end of the first straight segment is connected to the first gear slot, and the other end of the first straight segment is connected to the first arc-shaped segment; one end of the second straight segment is connected to the third gear slot, and the other end of the second straight segment is connected to the first arc-shaped segment; the first gear slot comprises at least a third straight segment, the third gear slot comprises at least a fourth straight segment, and the third straight segment intersects with the first straight segment creating a first included angle β₁, the fourth straight segment intersects the first straight segment creating a second included angle β₂.

75. The all-terrain vehicle of claim 74, wherein the first included angle β₁ is in the range from 120° to 140°, and the second included angle β₂ is in the range from 100° to 125°.

76. The all-terrain vehicle of claim 74, wherein the bottom surface of the cavity is set as a plane A₁, the first straight segment intersects with the plane A₁ creating a third included angle β₃, and the second straight segment intersects with the plane A₁ creating a fourth included angle β₄, the difference between the fourth angle β₄ and the third angle β₃ is in the range from 5° to 30°.

77. The all-terrain vehicle of claim 76, wherein the third included angle β₃ is in the range from 45° to 60°, and the fourth included angle β₄ is in the range from 55° to 75°.

78. The all-terrain vehicle of claim 76, wherein the third straight segment intersects with the plane A₁ creating a fifth included angle β₅; the fourth straight segment intersects with the plane A₁ creating a fifth angle β₆, and the fifth included angle β₅ is basically the same as the sixth included angle β₆.

79. The all-terrain vehicle of claim 64, wherein
the frame further comprises a middle frame portion, the middle frame portion is arranged between the front frame portion and the rear frame portion, an accommodating space is formed by the middle frame portion, the front frame portion and the rear frame portion;
the middle frame portion comprises
a first type of beams comprising at least a first cross beam and a second cross beam,
the first cross beam and the second cross beam being at least partially located on the same plane S; and
a second type of beams respectively connected to the first type of beams and comprising at least a first longitudinal beam;
the first longitudinal beam comprising a first rod and a second rod, one end of the first rod being connected to the first cross beam, and the other end of the first rod extending upward and toward the second cross beam; one end of the second rod being connected to the second cross beam, and the other end of the second rod extending upward toward the first cross beam and being connected to the first rod;
wherein the included angle between the first rod and the plane S is A1, and A1 is set to be in the range from 5° to 15°; and the included angle between the second rod and the plane S is A₂, and A₂ is set to be in the range from 5° to 15°.

80. The all-terrain vehicle of claim 79, wherein the included angle A1 is greater than the included angle A2.

81. The all-terrain vehicle of claim 64, further comprises
an electric socket unit mounted on the frame, the electric socket unit comprising a terminal block, a plurality of harnesses and a plurality of wiring terminals, and the wiring terminals comprising a first type of wiring terminals and a second type of wiring terminals; and
a battery electrically connected to the electric socket unit;
wherein the electrical socket unit further comprises
a power lock connected between the terminal block and the battery, and the opening/closing of the power lock is corresponded to the opening/closing of the all-terrain vehicle;
wherein the first type of wiring terminals are electrically connected to the battery by the harnesses, and the second type of wiring terminals are electrically connected to the power lock by the harnesses and the power lock is electrically connected to the battery.

82. The all-terrain vehicle of claim 81, wherein
the first type of wiring terminals comprises a first wiring terminal and a second wiring terminal, and the second type of wiring terminals comprise a third wiring terminal;
the first wiring terminal is connected to the positive electrode of the battery by the harnesses;
the second wiring terminal is connected to the negative electrode of the battery by the harnesses; and
the third wiring terminal is connected to the power lock by the harnesses.

83. The all-terrain vehicle of claim 81, wherein
the first type of wiring terminals comprises a first wiring terminal and a second wiring terminal, the second type of wiring terminals comprise a third wiring terminal and a fourth wiring terminal, wherein the first wiring terminal is connected to the positive electrode of the battery and the second wiring terminal is connected to the negative electrode of the battery to form a continuous circuit;
the third wiring terminal is connected to the negative electrode of the battery by the harnesses, and the fourth wiring terminal is connected to the power lock by the harnesses, and the power lock is connected to the positive electrode of the battery.

84. An all-terrain vehicle comprising:
a frame comprising a front frame portion and a rear frame portion, the front frame portion being located at the front end of the all-terrain vehicle, and the rear frame portion being located at the rear end of the all-terrain vehicle;
a front wheel set comprising a left-front wheel and a right-front wheel;
a rear wheel set comprising a left-rear wheel and a right-rear wheel; a rear suspension assembly mounted on the rear frame portion, the rear suspension assembly comprising a lower rocker arm unit, a upper rocker arm unit, and a rear wheel shaft support unit mounted on the lower rocker arm unit and the upper rocker arm unit, the lower rocker arm unit and the upper rocker arm unit are mounted on the frame portion, respectively;
wherein
the rear suspension assembly further comprises
a control arm unit located between the lower rocker arm unit and the upper rocker arm unit along the vertical direction, one end of the control arm unit being rotatably connected to the rear wheel shaft support unit, and the other end of the control arm unit being rotatably connected to the rear frame portion; and
a rear torsion bar unit located between the lower rocker arm unit and the upper rocker arm unit, the rear torsion bar unit comprising a rear torsion bar and a rear mounting seat, the rear mounting seat being fixed on the rear frame portion; wherein the rear torsion bar is located on the inner side of the rear frame portion and is rotatably mounted on the rear mounting seat, and both ends of the rear torsion bar are movably connected to the upper rocker arm unit.

85. The all-terrain vehicle of claim 84, wherein the lower rocker arm unit comprises a left-lower rocker arm and a right-lower rocker arm; the upper rocker arm unit comprises a left-upper rocker arm and a right-upper rocker arm; the rear wheel shaft support unit comprises a left-rear wheel shaft support and a right-rear wheel shaft support; one end of the left-lower rocker arm is rotatably connected to the left-rear wheel shaft support, and the other end of the left-lower rocker arm is rotatably mounted on the rear frame portion, one end of the right-lower rocker arm is rotatably connected to the right-rear wheel shaft support, and the other end of the right-lower rocker arm is rotatably mounted on the rear frame portion;
the all-terrain vehicle comprises two control arm units, one of control arm units is located between the left-lower rocker arm and the left-upper rocker along the vertical direction, and the two ends of the control arm unit are rotatably connected to the rear frame portion and the left-rear wheel shaft support, respectively; the other one control arm unit is located between the right-lower rocker arm and the right-upper rocker arm along a vertical direction, and the two ends of the control arm unit are rotatably connected to the rear frame portion and the right-rear wheel shaft support, respectively.

86. The all-terrain vehicle of claim 85, wherein the control arm unit comprises a control arm and two rotating bases, and the two rotating bases are respectively fixed on the rear frame portion and the rear wheel shaft supports;
the control arm is rotatably connected to the rotating bases.

87. The all-terrain vehicle of claim 86, wherein the control arm is a rigid arm; the control arm is rotatably connected to the rotating bases by spherical pairs.

88. The all-terrain vehicle of claim 85, further comprises a rear shock absorber unit comprising a left-rear shock absorber and a right-rear shock absorber; one end of the left-rear shock absorber is mounted on the left-lower rocker arm, and the other end extends upward and is connected to the rear frame portion; one end of the right-rear shock absorber is mounted on the right-lower rocker arm, and the other end extends upward and is connected to the rear frame portion.

89. The all-terrain vehicle of claim 88, wherein an avoidance space is formed between the right-upper rocker arm and the left-upper rocker arm, and the left-rear shock absorber and the right-rear shock absorber extend upward through the corresponding avoidance spaces.

90. The all-terrain vehicle of claim 88, wherein the connection between the left-rear shock absorber and the left-lower rocker arm is a point M, the connection between the left-lower rocker arm and the left-rear wheel shaft support is a point F, and the connection between the left-upper rocker arm and the left-rear wheel shaft support is a point N; wherein the point F and the point N do not coincide along the vertical direction of the all-terrain vehicle; the point M and the point F do not coincide along the front-rear direction of the all-terrain vehicle.

91. The all-terrain vehicle of claim 90, wherein a straight line is defined by connecting the point N and the center point of the left-rear wheel shaft support, and the distance from the point M to the straight line is in the range from 20 mm to 40 mm.

92. The all-terrain vehicle of claim 86, wherein the control arm unit is placed outside the rear frame portion.

93. An all-terrain vehicle comprising:
a frame comprising a front frame portion and a rear frame portion, the front frame portion being located at the front end of the all-terrain vehicle, and the rear frame portion being located at the rear end of the all-terrain vehicle;
a front wheel set comprising a left-front wheel and a right-front wheel;
a rear wheel set comprising a left-rear wheel and a right-rear wheel; a rear suspension assembly mounted on the rear frame portion, the rear suspension assembly comprising a lower rocker arm unit, a upper rocker arm unit, and a rear wheel shaft support unit mounted on the lower rocker arm unit and the upper rocker arm unit, the lower rocker arm unit and the upper rocker arm unit are mounted on the frame portion, respectively; and
a mode switch comprising a two-wheeled drive gear, a four-wheeled drive gear and a front-drive lock gear, and the four-wheeled gear being located between the two-wheeled drive gear and the front-drive lock gear;
wherein
the rear suspension assembly further comprises
a control arm unit located between the lower rocker arm unit and the upper rocker arm unit along the vertical direction, one end of the control arm unit being rotatably connected to the rear wheel shaft support unit, and the other end of the control arm unit being rotatably connected to the rear frame portion; and
a rear torsion bar unit located between the lower rocker arm unit and the upper rocker arm unit, the rear torsion bar unit comprising a rear torsion bar and a rear mounting seat, the rear mounting seat being fixed on the rear frame portion; wherein the rear torsion bar is located on the inner side of the rear frame portion and is rotatably mounted on the rear mounting seat, and both ends of the rear torsion bar are movably connected to the upper rocker arm unit;
the mode switch further comprises
a housing comprising a cavity, a first gear slot, a second gear slot and a third gear slot being disposed in the cavity, the second gear slot being located between the first gear slot and the third gear slot, all of the first gear slot, the second gear slot and the third gear slot being arc-shaped slots;
a pressing plate rotatably connected to the housing; and
a gear lever unit, one end of the gear lever unit being connected to the pressing plate, and the other end being located in the cavity, and being capable of swinging along with the pressing plate and switching among the first gear slot, the second gear slot and the third gear slot;
the second gear slot comprises a first connection end connected to the first gear slot, and the first gear slot comprises a second connection end connected to the first connection end, the first connection end intersects with the second connection end creating a first intersection point P and a first included angle β₁;
the second gear slot further comprises a third connection end connected to the third gear slot, the third gear slot comprises a fourth connection end connected to the third connection end, the third connection end intersects with the fourth connection end creating a second intersection point Q and a second included angle β₂; the difference between the first angle β₁ and the second angle β₂ is in the range from 5° to 30°.

94. The all-terrain vehicle of claim 93, wherein the position of the second intersection point Q is relatively higher than the position of the first intersection point P along the axial direction of the cavity.

95. The all-terrain vehicle of claim 93, wherein the second gear slot comprises a first arc-shaped segment, a first straight segment, and a second straight segment, one end of the first straight segment is connected to the first gear slot, and the other end of the first straight segment is connected to the first arc-shaped segment; one end of the second straight segment is connected to the third gear slot, and the other end of the second straight segment is connected to the first arc-shaped segment; the first gear slot comprises at least a third straight segment, the third gear slot comprises at least a fourth straight segment, and the third straight segment intersects with the first straight segment creating a first included angle β₁, the fourth straight segment intersects the first straight segment creating a second included angle β₂.

96. The all-terrain vehicle of claim 95, wherein the first included angle β₁ is in the range from 120° to 140°, and the second included angle β₂ is in the range from 100° to 125°.

97. The all-terrain vehicle of claim 95, wherein the bottom surface of the cavity is set as a plane A₁, the first straight segment intersects with the plane A₁ creating a third included angle β₃, and the second straight segment intersects with the plane A₁ creating a fourth included angle β₄, the difference between the fourth angle β₄ and the third angle β₃ is in the range from 5° to 30°.

98. The all-terrain vehicle of claim 97, wherein the third included angle β₃ is in the range from 45° to 60°, and the fourth included angle β₄ is in the range from 55° to 75°.

99. The all-terrain vehicle of claim 97, wherein the third straight segment intersects with the plane A₁ creating a fifth included angle β₅; the fourth straight segment intersects with the plane A₁ creating a fifth angle β₆, and the fifth included angle β₅ is basically the same as the sixth included angle β₆.

100. The all-terrain vehicle of claim 94, wherein the gear lever unit comprises a switching lever, an elastic member and a ball, one end of the switching lever is connected to the pressing plate, and the switching lever is capable of swing in the housing driven by the pressing plate; the elastic member is mounted on the switch lever, and one part of the ball butts against the elastic member, and the other part is able to fall into the first gear slot, the second gear slot or the third gear slot with the swing of the switching lever.

101. The all-terrain vehicle of claim 100, wherein the end of the switching lever away from the pressing plate is provided with a mounting hole, the elastic member is mounted in the mounting hole, and the part of the ball is located in the mounting hole and butts against the elastic member.

102. An all-terrain vehicle comprising:
a frame comprising a front frame portion, a middle frame portion, and a rear frame portion, the front frame portion being located at the front end of the all-terrain vehicle, and the rear frame portion being located at the rear end of the all-terrain vehicle;
the middle frame portion is arranged between the front frame portion and the rear frame portion, an accommodating space is formed by the middle frame portion, the front frame portion and the rear frame portion;
the middle frame portion comprises
a first type of beams comprising at least a first cross beam and a second cross beam, the first cross beam and the second cross beam being at least partially located on the same plane S; and
a second type of beams respectively connected to the first type of beams and comprising at least a first longitudinal beam;
a front wheel set comprising a left-front wheel and a right-front wheel;
a rear wheel set comprising a left-rear wheel and a right-rear wheel;
a rear suspension assembly mounted on the rear frame portion, the rear suspension assembly comprising a lower rocker arm unit, a upper rocker arm unit, and a rear wheel shaft support unit mounted on the lower rocker arm unit and the upper rocker arm unit, the lower rocker arm unit and the upper rocker arm unit are mounted on the frame portion, respectively; and
wherein the rear suspension assembly further comprises
a control arm unit located between the lower rocker arm unit and the upper rocker arm unit along the vertical direction, one end of the control arm unit being rotatably connected to the rear wheel shaft support unit, and the other end of the control arm unit being rotatably connected to the rear frame portion; and
a rear torsion bar unit located between the lower rocker arm unit and the upper rocker arm unit, the rear torsion bar unit comprising a rear torsion bar and a rear mounting seat, the rear mounting seat being fixed on the rear frame portion; wherein the rear torsion bar is located on the inner side of the rear frame portion and is rotatably mounted on the rear mounting seat, and both ends of the rear torsion bar are movably connected to the upper rocker arm unit;
the first longitudinal beam comprising a first rod and a second rod, one end of the first rod being connected to the first cross beam, and the other end of the first rod extending upward and toward the second cross beam; one end of the second rod being connected to the second cross beam, and the other end of the second rod extending upward toward the first cross beam and being connected to the first rod;
wherein the included angle between the first rod and the plane S is A1, and A1 is set to be in the range from 5° to 15°; and the included angle between the second rod and the plane S is A2, and A2 is set to be in the range from 5° to 15°.

103. The all-terrain vehicle of claim 102, wherein the included angle A1 is greater than the included angle A2.

104. The all-terrain vehicle of claim 102, wherein the first rods are welded to the second rods.

105. The all-terrain vehicle of claim 102, wherein the first rods in the second type of beams are arranged parallel to each other, and the second rods in the second type of beams are arranged parallel to each other.

106. The all-terrain vehicle of claim 102, wherein the first rods are welded to the first cross beams and the second rods are welded to the second cross beams.

107. The all-terrain vehicle of claim 102, wherein the middle frame portion further comprises
at least two longitudinal reinforcement pipes, one end of each longitudinal reinforcement pipe is fixed to the first cross beam, and the other end is fixed to the second cross beam;
wherein the second type of beams are located between at least the two longitudinal reinforcement pipes.

108. The all-terrain vehicle of claim 107, wherein the front frame portion comprises a first pillar, and the rear frame portion comprises a second pillar, one end of the first pillar is connected to the first cross beam, the other end of the first pillar extends upward; one end of the second pillar is connected to the second cross beam, and the other end extends upward; a first reinforcement rod, a second reinforcement rod and a reinforcement plate are arranged between the rear frame portion and the middle frame portion; one end of the first reinforcement rod is connected to the longitudinal reinforcement pipe, and the other end of the first reinforcement rod is connected to the second pillar, one end of the second reinforcement rod is connected to the bearing bracket in the rear frame portion, and the other end of the second reinforcement rod is connected to the second pillar, one end of the reinforcement plate is connected to the first reinforcement rod, and the other end of the reinforcement plate extends toward the rear end of the all-terrain vehicle and extends beyond the second pillar, and is connected to the second reinforcement rod.

109. The all-terrain vehicle of claim 108, wherein the first reinforcement rod is welded to the second pillar; the second reinforcement rod is welded to the second pillar; the reinforcement plate is welded to the first reinforcement rod and the second reinforcement rod, respectively.

110. The all-terrain vehicle of claim 107, wherein the middle frame portion further comprises multiple cross reinforcement pipes arranged between the longitudinal beams and the corresponding longitudinal reinforcement pipes, and one end of each cross reinforcement pipe is connected to the longitudinal beams, and the other end is connected to the longitudinal reinforcement pipe.

111. An all-terrain vehicle comprising:
a frame comprising a front frame portion and a rear frame portion, the front frame portion being located at the front end of the all-terrain vehicle, and the rear frame portion being located at the rear end of the all-terrain vehicle;
a front wheel set comprising a left-front wheel and a right-front wheel;
a rear wheel set comprising a left-rear wheel and a right-rear wheel;
an electric socket unit mounted on the frame, the electric socket unit comprising a terminal block, a plurality of harnesses and a plurality of wiring terminals, and the wiring terminals comprising a first type of wiring terminals and a second type of wiring terminals;
a battery electrically connected to the electric socket unit;
a rear suspension assembly mounted on the rear frame portion, the rear suspension assembly comprising a lower rocker arm unit, a upper rocker arm unit, and a rear wheel shaft support unit mounted on the lower rocker arm unit and the upper rocker arm unit, the lower rocker arm unit and the upper rocker arm unit are mounted on the frame portion, respectively; and
wherein the rear suspension assembly further comprises
a control arm unit located between the lower rocker arm unit and the upper rocker arm unit along the vertical direction, one end of the control arm unit being rotatably connected to the rear wheel shaft support unit, and the other end of the control arm unit being rotatably connected to the rear frame portion; and a rear torsion bar unit located between the lower rocker arm unit and the upper rocker arm unit, the rear torsion bar unit comprising a rear torsion bar and a rear mounting seat, the rear mounting seat being fixed on the rear frame portion; wherein the rear torsion bar is located on the inner side of the rear frame portion and is rotatably mounted on the rear mounting seat, and both ends of the rear torsion bar are movably connected to the upper rocker arm unit;
wherein the electrical socket unit further comprises
a power lock connected between the terminal block and the battery, and the opening/closing of the power lock is corresponded to the opening/closing of the all-terrain vehicle;
wherein the first type of wiring terminals is electrically connected to the battery by the harnesses, and the second type of wiring terminals are electrically connected to the power lock by the harnesses and the power lock is electrically connected to the battery.

112. The all-terrain vehicle of claim 111, wherein
the first type of wiring terminals comprises a first wiring terminal and a second wiring terminal, and the second type of wiring terminals comprise a third wiring terminal;
the first wiring terminal is connected to the positive electrode of the battery by the harnesses;
the second wiring terminal is connected to the negative electrode of the battery by the harnesses; and
the third wiring terminal is connected to the power lock by the harnesses.

113. The all-terrain vehicle of claim 111, wherein
the first type of wiring terminals comprises a first wiring terminal and a second wiring terminal, the second type of wiring terminals comprise a third wiring terminal and a fourth wiring terminal, wherein the first wiring terminal is connected to the positive electrode of the battery and the second wiring terminal is connected to the negative electrode of the battery to form a continuous circuit;
the third wiring terminal is connected to the negative electrode of the battery by the harnesses, and the fourth wiring terminal is connected to the power lock by the harnesses, and the power lock is connected to the positive electrode of the battery.

114. The all-terrain vehicle of claim 111, further comprises a plurality of fuse boxes arranged on the corresponding wiring harnesses.

115. The all-terrain vehicle of claim 114, wherein the fuse boxes comprise a main fuse and a plurality of sub fuses, the main fuse is arranged close to the positive electrode of the battery, and one of the sub fuses is arranged on the harness connected between the first type of wiring terminals and the positive electrode of the battery, the other sub fuse is arranged on the harness connected between the second type of wiring terminals and the power lock.

116. The all-terrain vehicle of claim 115, wherein the sub-fuse and the main fuse are arranged in series on the wiring harnesses connected between the wiring terminals and the positive electrode of the battery.

117. The all-terrain vehicle of claim 111, wherein the wiring harnesses comprises a first wiring harness and a second wiring harness, one end of the first wiring harness is connected to the first type of wiring terminals, and the other end of the first wiring harness is provided with a wiring male terminal; one end of the second wiring harness is connected to the battery, and the other end of the second wiring harness is provided with a terminal male terminal; the wiring male terminal is inserted into a wiring female terminal.

118. The all-terrain vehicle of claim 111, wherein barrier plates are provided on a connecting base, and two adjacent wiring terminals are isolated by one barrier plate.

119. The all-terrain vehicle of claim 118, wherein the barrier plate and the connecting base are integrated.

120. The all-terrain vehicle of claim 111, wherein the electric socket unit further comprises a plurality of covers covered on the terminal block for protecting the wiring terminals.
